# EUROPEAN PATENT SPECIFICATION

(11) **EP 4 218 327 B1**
(45) Date of publication and mention of the grant of the patent: **11.11.2026**
(21) Application number: 20954651.4
(22) Date of filing: 27.09.2020
(51) Int. Cl.: H04L 5/00, H04W 72/20

(54) **DYNAMIC INDICATION OF CARRIER AND/OR BANDWIDTH PART FOR TRANSMITTING CONTROL INFORMATION**
DYNAMISCHE ANZEIGE EINES TRÄGERS UND/ODER EINES BANDBREITENTEILS ZUR ÜBERTRAGUNG VON STEUERINFORMATIONEN
INDICATION DYNAMIQUE DE PORTEUSE ET/OU DE PARTIE DE BANDE PASSANTE POUR LA TRANSMISSION D'INFORMATIONS DE COMMANDE

(43) Date of publication of application: 02.08.2023
(73) Proprietor: Huawei Technologies Co., Ltd., Shenzhen, Guangdong 518129 (CN)
(72) Inventor: LYU, Yongxia, Shenzhen, Guangdong 518129 (CN); MA, Jianglei, Kanata, Ontario 231 (CA); ZHANG, Liqing, Kanata, Ontario 231 (CA)
(74) Representative: Isarpatent
(86) International application number: PCT/CN2020/118042
(87) International publication number: WO 2022/061800

(56) References cited:
- CN-A- 110 463 311
- CN-A- 110 536 423
- CN-A- 111 034 320
- CN-A- 111 066 371
- US-A1- 2018 279 289
- US-A1- 2019 253 200
- US-A1- 2020 145 169
- HUAWEI, HISILICON: "Overview of wider bandwidth operations", 3GPP DRAFT; R1-1709972, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Qingdao, China; 20170627 - 20170630, 26 June 2017 (2017-06-26), Mobile Competence Centre ; 650, route des Lucioles ; F-06921 Sophia-Antipolis Cedex ; France , XP051299197

## Description

### FIELD

The present disclosure relates to wireless communication, and more specifically, the invention relates to methods for transmission of control information, apparatus and device.

### BACKGROUND

In some wireless communication systems, user equipments (UEs) wirelessly communicate with one or more base stations. A wireless communication from a UE to a base station is referred to as an uplink communication. A wireless communication from a base station to a UE is referred to as a downlink communication. Resources are required to perform uplink and downlink communications. For example, a base station may wirelessly transmit data to a UE in a downlink communication at a particular frequency for a particular duration of time. The frequency and time duration are examples of resources, typically referred to as "time-frequency resources".

Two devices that wirelessly communicate with each other over time-frequency resources need not necessarily be a UE and a base station. For example, two UEs may wirelessly communicate with each other over a sidelink using device-to-device (D2D) communication. As another example, two network devices (e.g. a terrestrial base station and a non-terrestrial base station, such as a drone) may wirelessly communicate with each other over a backhaul link.

When two devices wirelessly communicate with each other, control information and data may be exchanged. Data includes the bits that one device wishes to ultimately convey to the other device, e.g. an internet packet. Control information includes information that is used to control and support the communication of the data, e.g. information that configures the devices for the communication, hybrid automatic repeat request (HARQ) feedback, channel measurement reports, scheduling information, etc. Control information may sometimes be dynamically indicated, e.g. in the physical layer in a control channel. An example of control information that is dynamically indicated is downlink control information (DCI). Control information may sometimes be semi-statically indicated, e.g. in radio resource control (RRC) signaling. Control information may sometimes be referred to as signaling.

A wireless communication may be transmitted on a carrier frequency. The carrier frequency will be referred to as the carrier. A carrier may alternatively be called a component carrier (CC) or a cell. A carrier may be characterized by its bandwidth and the center frequency of the carrier. A carrier may be on licensed or unlicensed spectrum. A carrier may have one or more bandwidth parts (BWPs). A BWP is a contiguous set of frequency subcarriers of a given carrier. In uplink and downlink communications, a primary cell ("PCell") is the primary carrier used by a UE to communicate with the network. A secondary cell ("SCell") is a secondary carrier that may be used by the UE to communicate with the network. In dual connectivity (DC) mode, the UE may have multiple active links to different base stations, in which case the primary cell of a secondary base station may be referred to as a primary secondary cell ("PSCell").

Different carriers and/or BWPs may sometimes be utilized for wireless communication between two devices. If multiple carriers and/or BWPs are used or available for use, then mechanisms for coordinating transmission amongst the different carriers and/or BWPs are needed.

US 2020/145169 A1 relates to uplink transmissions using multiple active resources. It discloses systems, apparatuses, and methods for wireless communications.

US 2019/253200 A1 relates to systems and methods for allocation of uplink control channel resources in unlicensed spectrum.

WO 2018/231971 A1 relates to an enhancement on scheduling and HARQ-ACK feedback for URLLC, multiplexing scheme for control/data channel and DM-RS for NR, and activation mechanism, scheduling aspects, and synchronization signal (SS) blocks for new radio (NR) system with multiple bandwidth parts.

### SUMMARY

The objection of the present invention is provide a method according to claim 1 or 6, an apparatus according to claim 4 and a device according to claim 9. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such. One type of control information is HARQ feedback. An example of HARQ feedback is an acknowledgement (ACK). For example, if data is successfully decoded then an ACK may be transmitted to indicate the successful decoding. Another example of HARQ feedback is a negative acknowledgement (NACK). For example, if data is unsuccessfully decoded then a NACK may be transmitted to indicate that decoding was unsuccessful. Sometimes NACKs are not used, e.g. the absence of an ACK is indicative of a NACK.

In some prior wireless communication systems, e.g. in new radio (NR), the carrier used to transmit the HARQ feedback is semi-statically configured using RRC signaling. However, semi-static configuration of the carrier for HARQ feedback might not be suitable for scenarios in which latency is a concern, e.g. for ultra-reliable low-latency communication (URLLC) in which the delay requirement may be significant, e.g. 0.1ms. Consider the following example situation. A UE may possibly transmit HARQ feedback on either carrier 1 or carrier 2. The network uses RRC signaling to semi-statically configure the UE to transmit HARQ feedback on carrier 1. Low latency data arrives for communication from the network to the UE. The low latency data is transmitted to the UE and decoding is successful. The UE prepares an ACK to send to the network, but a time-frequency resource for transmitting the ACK is not immediately available on carrier 1. Transmission of the ACK is delayed until a time-frequency resource on carrier 1 becomes available for transmitting the ACK, which may cause the low latency delay requirement to not be met. Meanwhile, carrier 2 had a time-frequency resource available for transmitting the ACK as soon as the ACK was ready to be transmitted. However, using RRC signaling to semi-statically switch from carrier 1 to carrier 2 to transmit the ACK is not dynamic and would take longer than just waiting for a time-frequency resource to become available on carrier 1 for transmitting the ACK. Communication is not as efficient and the low latency delay requirement is not met.

In embodiments below, a carrier and/or BWP for transmitting control information is instead dynamically indicated, rather than semi-statically indicated. Dynamic indication may be an indication in lower layer, e.g. physical layer / layer 1 signaling, rather than in higher-layer semi-static signaling such as RRC signaling or in a medium access control (MAC) control element (CE). In the example scenario above, the network may dynamically indicate to the UE to use carrier 2 to transmit the HARQ feedback. The dynamic indication may be sent along with the low latency data, e.g. in a data channel, or in a control channel (e.g. in DCI) possibly at the same time as scheduling the transmission of the low latency data.

The embodiments are not limited to HARQ feedback. The control information may be other types of control information instead of or in addition to HARQ feedback. As one example, the control information may be a measuring report, such as a sounding measurement report, and/or a transmission request, such as scheduling request (SR) For example, the carrier and/or BWP for transmitting the measurement report and/or SR may be dynamically indicated.

The embodiments are not limited to low latency data scenarios. More generally, dynamic indication of the carrier and/or BWP for transmitting control information may assist in facilitating more efficient communication between devices, even in scenarios that do not involve low latency communication. For example, spectrum efficiency for different services/scenarios may be improved, e.g. because HARQ feedback may be quicker, thereby allowing for prompt scheduling for potential retransmission or new transmission.

The embodiments are not limited to uplink/downlink communication, but may be implemented in any situation in which two devices are wirelessly communicating with each other, e.g. over an uplink, downlink, sidelink, or backhaul link. For example, the solution may be applied to applications such as satellite communication and Internet of Vehicle (IoV).

By dynamically indicating a carrier and/or BWP on which control information is to be transmitted, the following technical benefit may occur: prompter and/or more efficient communication of the control information may be achieved because a time-frequency resource available (or possibly available) for prompt transmission of the control information may be dynamically determined, and then the device that is to transmit the control information may be dynamically instructed to use the carrier and/or BWP associated with the time-frequency resource. Low latency applications may possibly be better supported.

Some embodiments may be implemented in wireless communication systems that use one or more frame structures to define the transmission structure. Different frame structures are possible, including frame structures that may be more flexible than the frame structures in NR or long-term evolution (LTE). Some embodiments may be implemented in frame structures that may support full duplex (FD) communication and frequency division duplex (FDD) communication and time-division duplex (TDD) communication.

The invention is defined by the independent claims. The dependent claims set out advantageous embodiments.

### BRIEF DESCRIPTION OF THE DRAWINGS

Embodiments will be described, by way of example only, with reference to the accompanying figures wherein:
FIG. 1 is a network diagram of an example communication system;
FIG. 2 is a block diagram of an example electronic device;
FIG. 3 is a block diagram of another example electronic device;
FIG. 4 is a block diagram of example component modules;
FIG. 5 is a block diagram of an example user equipment and base station;
FIG. 6 is a block diagram of an example apparatus and device;
FIG. 7 illustrates an example of four carriers on a frequency spectrum of a wireless medium;
FIG. 8 illustrates a device and apparatus exchanging two wireless communications, according to one embodiment;
FIGs. 9 to 11 illustrate dynamic indication of a carrier and/or BWP for transmitting uplink control information, according to various embodiments;
FIGs. 12 to 14 illustrate frame structures, according to various embodiments;
FIGs. 15 to 23 illustrate dynamic indication of a carrier and/or BWP for transmitting control information, according to various embodiments; and
FIG. 24 is a block diagram of a method performed by a device and an apparatus, according to one embodiment.

### DETAILED DESCRIPTION

For illustrative purposes, specific example embodiments will now be explained in greater detail below in conjunction with the figures.

### Example communication systems and devices

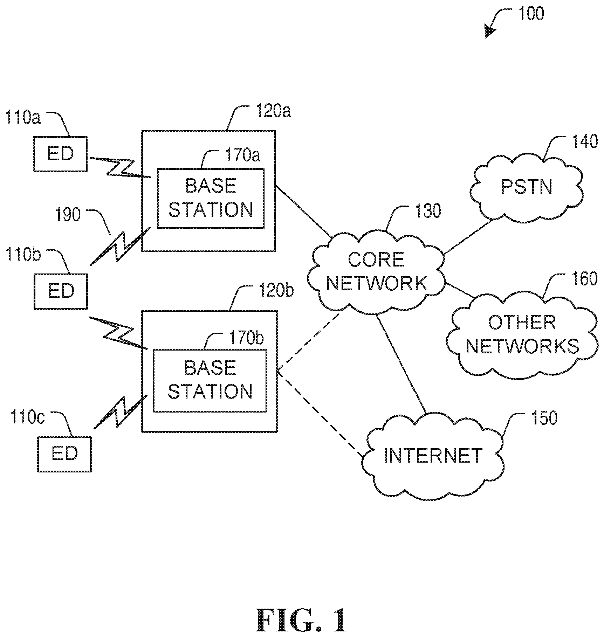

FIG. 1 illustrates an example communication system 100. In general, the communication system 100 enables multiple wireless or wired elements to communicate data and other content. The purpose of the communication system 100 may be to provide content, such as voice, data, video, and/or text, via broadcast, narrowcast, multicast, unicast, user device to user device, etc. The communication system 100 may operate by sharing resources, such as bandwidth.

In this example, the communication system 100 includes electronic devices (ED) 110a-110c, radio access networks (RANs) 120a-120b, a core network 130, a public switched telephone network (PSTN) 140, the internet 150, and other networks 160. Although certain numbers of these components or elements are shown in FIG. 1, any reasonable number of these components or elements may be included in the communication system 100.

The EDs 110a-110c are configured to operate, communicate, or both, in the communication system 100. For example, the EDs 110a-110c are configured to transmit, receive, or both via wireless or wired communication channels. Each ED 110a-110c represents any suitable end user device for wireless operation and may include such devices (or may be referred to) as a user equipment/device (UE), wireless transmit/receive unit (WTRU), mobile station, fixed or mobile subscriber unit, cellular telephone, station (STA), machine type communication (MTC) device, personal digital assistant (PDA), smartphone, laptop, computer, tablet, wireless sensor, consumer electronics device, car, truck, bus, train, drone, etc.

In FIG. 1, the RANs 120a-120b include base stations 170a-170b, respectively. Each base station 170a-170b is configured to wirelessly interface with one or more of the EDs 110a-110c to enable access to any other base station 170a-170b, the core network 130, the PSTN 140, the internet 150, and/or the other networks 160. For example, the base stations 170a-170b may include (or be) one or more of several well-known devices, such as a base transceiver station (BTS), a Node-B (NodeB), an evolved NodeB (eNodeB or eNB), a Home eNodeB, a gNodeB, a transmission point (TP), a site controller, an access point (AP), or a wireless router. Any ED 110a-110c may be alternatively or additionally configured to interface, access, or communicate with any other base station 170a-170b, the internet 150, the core network 130, the PSTN 140, the other networks 160, or any combination of the preceding. The communication system 100 may include RANs, such as RAN 120b, wherein the corresponding base station 170b accesses the core network 130 via the internet 150.

The EDs 110a-110c and base stations 170a-170b are examples of communication equipment that can be configured to implement some or all of the functionality and/or embodiments described herein. In the embodiment shown in FIG. 1, the base station 170a forms part of the RAN 120a, which may include other base stations, base station controller(s) (BSC), radio network controller(s) (RNC), relay nodes, elements, and/or devices. Any base station 170a, 170b may be a single element, as shown, or multiple elements, distributed in the corresponding RAN, or otherwise. Also, the base station 170b forms part of the RAN 120b, which may include other base stations, elements, and/or devices. Each base station 170a-170b transmits and/or receives wireless signals within a particular geographic region or area, sometimes referred to as a "cell" or "coverage area". A cell may be further divided into cell sectors, and a base station 170a-170b may, for example, employ multiple transceivers to provide service to multiple sectors. In some embodiments there may be established pico or femto cells where the radio access technology supports such. In some embodiments, multiple transceivers could be used for each cell, for example using multiple-input multiple-output (MIMO) technology. The number of RAN 120a-120b shown is exemplary only. Any number of RAN may be contemplated when devising the communication system 100.

The base stations 170a-170b communicate with one or more of the EDs 110a-110c over one or more air interfaces 190 using wireless communication links e.g. radio frequency (RF), microwave, infrared (IR), etc. The air interfaces 190 may utilize any suitable radio access technology. For example, the communication system 100 may implement one or more channel access methods, such as code division multiple access (CDMA), time division multiple access (TDMA), frequency division multiple access (FDMA), orthogonal FDMA (OFDMA), or single-carrier FDMA (SC-FDMA) in the air interfaces 190.

A base station 170a-170b may implement Universal Mobile Telecommunication System (UMTS) Terrestrial Radio Access (UTRA) to establish an air interface 190 using wideband CDMA (WCDMA). In doing so, the base station 170a-170b may implement protocols such as HSPA, HSPA+ optionally including HSDPA, HSUPA or both. Alternatively, a base station 170a-170b may establish an air interface 190 with Evolved UTMS Terrestrial Radio Access (E-UTRA) using LTE, LTE-A, and/or LTE-B. It is contemplated that the communication system 100 may use multiple channel access functionality, including such schemes as described above. Other radio technologies for implementing air interfaces include IEEE 802.11, 802.15, 802.16, CDMA2000, CDMA2000 1X, CDMA2000 EV-DO, IS-2000, IS-95, IS-856, GSM, EDGE, and GERAN. Other multiple access schemes and wireless protocols may be utilized.

The RANs 120a-120b are in communication with the core network 130 to provide the EDs 110a-110c with various services such as voice, data, and other services. The RANs 120a-120b and/or the core network 130 may be in direct or indirect communication with one or more other RANs (not shown), which may or may not be directly served by core network 130, and may or may not employ the same radio access technology as RAN 120a, RAN 120b or both. The core network 130 may also serve as a gateway access between (i) the RANs 120a-120b or EDs 110a-110c or both, and (ii) other networks (such as the PSTN 140, the internet 150, and the other networks 160). In addition, some or all of the EDs 110a-110c may include functionality for communicating with different wireless networks over different wireless links using different wireless technologies and/or protocols. Instead of wireless communication (or in addition thereto), the EDs may communicate via wired communication channels to a service provider or switch (not shown), and to the internet 150. PSTN 140 may include circuit switched telephone networks for providing plain old telephone service (POTS). Internet 150 may include a network of computers and subnets (intranets) or both, and incorporate protocols, such as IP, TCP, UDP. EDs 110a-110c may be multimode devices capable of operation according to multiple radio access technologies, and incorporate multiple transceivers necessary to support such.

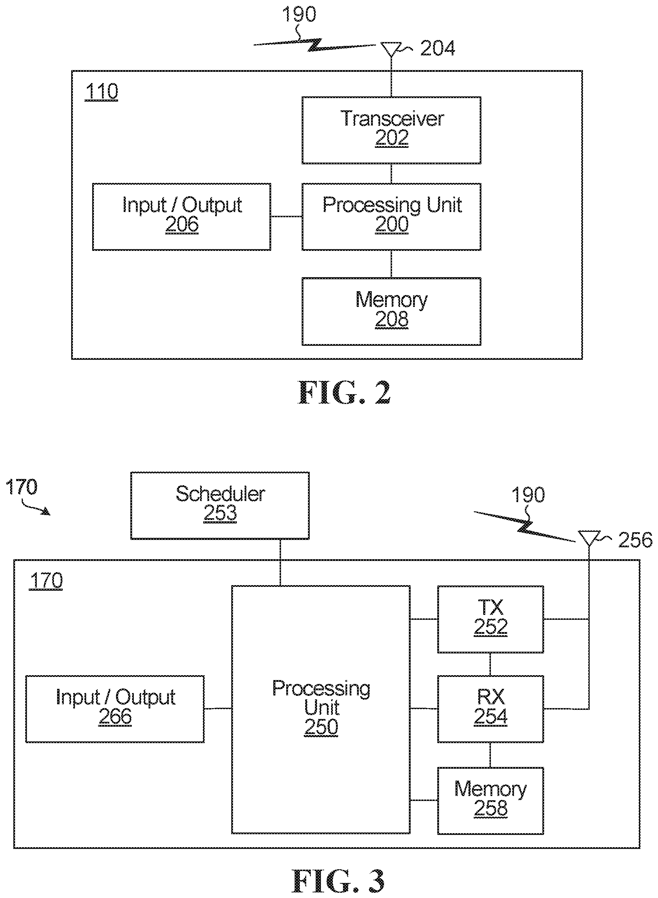

FIGs. 2 and 3 illustrate example devices that may implement the methods and teachings according to this disclosure. In particular, FIG. 2 illustrates an example ED 110, and FIG. 3 illustrates an example base station 170. These components could be used in the communication system 100 or in any other suitable system.

As shown in FIG. 2, the ED 110 includes at least one processing unit 200. The processing unit 200 implements various processing operations of the ED 110. For example, the processing unit 200 could perform signal coding, data processing, power control, input/output processing, or any other functionality enabling the ED 110 to operate in the communication system 100. The processing unit 200 may also be configured to implement some or all of the functionality and/or embodiments described in more detail herein. Each processing unit 200 includes any suitable processing or computing device configured to perform one or more operations. Each processing unit 200 could, for example, include a microprocessor, microcontroller, digital signal processor, field programmable gate array, or application specific integrated circuit.

The ED 110 also includes at least one transceiver 202. The transceiver 202 is configured to modulate data or other content for transmission by at least one antenna 204 or Network Interface Controller (NIC). The transceiver 202 is also configured to demodulate data or other content received by the at least one antenna 204. Each transceiver 202 includes any suitable structure for generating signals for wireless or wired transmission and/or processing signals received wirelessly or by wire. Each antenna 204 includes any suitable structure for transmitting and/or receiving wireless or wired signals. One or multiple transceivers 202 could be used in the ED 110. One or multiple antennas 204 could be used in the ED 110. Although shown as a single functional unit, a transceiver 202 could also be implemented using at least one transmitter and at least one separate receiver.

The ED 110 further includes one or more input/output devices 206 or interfaces (such as a wired interface to the internet 150). The input/output devices 206 permit interaction with a user or other devices in the network. Each input/output device 206 includes any suitable structure for providing information to or receiving information from a user, such as a speaker, microphone, keypad, keyboard, display, or touch screen, including network interface communications.

In addition, the ED 110 includes at least one memory 208. The memory 208 stores instructions and data used, generated, or collected by the ED 110. For example, the memory 208 could store software instructions or modules configured to implement some or all of the functionality and/or embodiments described herein and that are executed by the processing unit(s) 200. Each memory 208 includes any suitable volatile and/or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in FIG. 3, the base station 170 includes at least one processing unit 250, at least one transmitter 252, at least one receiver 254, one or more antennas 256, at least one memory 258, and one or more input/output devices or interfaces 266. A transceiver, not shown, may be used instead of the transmitter 252 and receiver 254. A scheduler 253 may be coupled to the processing unit 250. The scheduler 253 may be included within or operated separately from the base station 170. The processing unit 250 implements various processing operations of the base station 170, such as signal coding, data processing, power control, input/output processing, or any other functionality. The processing unit 250 can also be configured to implement some or all of the functionality and/or embodiments described in more detail herein. Each processing unit 250 includes any suitable processing or computing device configured to perform one or more operations. Each processing unit 250 could, for example, include a microprocessor, microcontroller, digital signal processor, field programmable gate array, or application specific integrated circuit.

Each transmitter 252 includes any suitable structure for generating signals for wireless or wired transmission to one or more EDs or other devices. Each receiver 254 includes any suitable structure for processing signals received wirelessly or by wire from one or more EDs or other devices. Although shown as separate components, at least one transmitter 252 and at least one receiver 254 could be combined into a transceiver. Each antenna 256 includes any suitable structure for transmitting and/or receiving wireless or wired signals. Although a common antenna 256 is shown here as being coupled to both the transmitter 252 and the receiver 254, one or more antennas 256 could be coupled to the transmitter(s) 252, and one or more separate antennas 256 could be coupled to the receiver(s) 254. Each memory 258 includes any suitable volatile and/or non-volatile storage and retrieval device(s) such as those described above in connection to the ED 110. The memory 258 stores instructions and data used, generated, or collected by the base station 170. For example, the memory 258 could store software instructions or modules configured to implement some or all of the functionality and/or embodiments described above and that are executed by the processing unit(s) 250.

Each input/output device 266 permits interaction with a user or other devices in the network. Each input/output device 266 includes any suitable structure for providing information to or receiving/providing information from a user, including network interface communications.

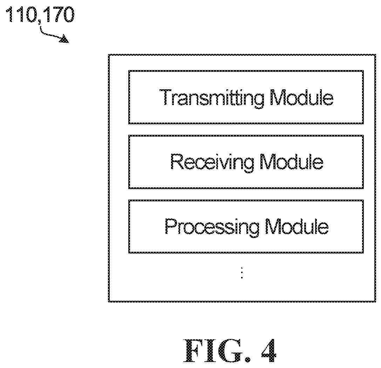

One or more steps of the embodiment methods provided herein may be performed by corresponding units or modules, according to FIG. 4. FIG. 4 illustrates units or modules in a device, such as in ED 110 or base station 170. For example, a signal may be transmitted by a transmitting unit or a transmitting module. A signal may be received by a receiving unit or a receiving module. A signal may be processed by a processing unit or a processing module. The processing module may encompass the units/modules described later, in particular the processor 210 or processor 260. Other units/modules may be included in FIG. 4, but are not shown. The respective units/modules may be hardware, software, or a combination thereof. For instance, one or more of the units/modules may be an integrated circuit, such as field programmable gate arrays (FPGAs) or application-specific integrated circuits (ASICs). It will be appreciated that where the modules are software, they may be retrieved by a processor, in whole or part as needed, individually or together for processing, in single or multiple instances as required, and that the modules themselves may include instructions for further deployment and instantiation.

Additional details regarding the EDs 110 and the base stations 170 are known to those of skill in the art. As such, these details are omitted here for clarity.

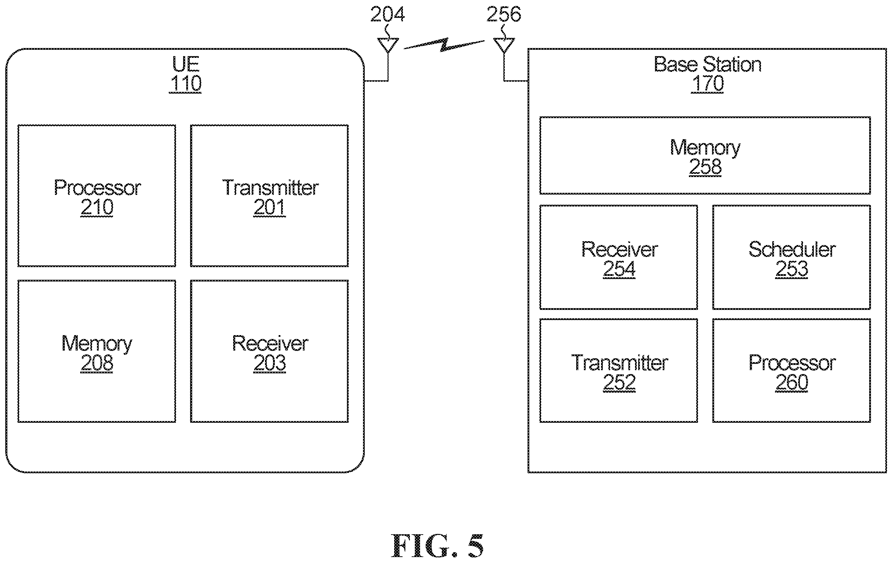

FIG. 5 illustrates another example of an ED 110 and a base station 170. The ED 110 will hereafter be referred to as a user equipment (UE) 110.

The base station 170 may be called other names in some implementations, such as a transmit-and-receive point (TRP), a transmit-and-reception point, a base transceiver station, a radio base station, a network node, a transmit/receive node, a Node B, an evolved NodeB (eNodeB or eNB), a gNB, a relay station, or a remote radio head. In some embodiments, the parts of the base station 170 may be distributed. For example, some of the modules of the base station 170 may be located remote from the equipment housing the antennas of the base station 170, and may be coupled to the equipment housing the antennas over a communication link (not shown). Therefore, in some embodiments, the term base station 170 may also refer to modules on the network side that perform processing operations, such as resource allocation (scheduling), message generation, encoding/decoding, etc., and that are not necessarily part of the equipment housing the antennas and/or panels of the base station 170. For example, the modules that are not necessarily part of the equipment housing the antennas/panels of the base station 170 may dynamically select the carrier and/or BWP on which control information is to be transmitted by the UE 110 and encode a dynamic indication of the carrier and/or BWP. The modules may also be coupled to other base stations. In some embodiments, the base station 170 may actually be a plurality of base stations that are operating together to serve the UE 110, e.g. through coordinated multipoint transmissions. In some embodiments, some or all of the base station 170 may be non-terrestrial, e.g. mounted on a flying device, such as a drone.

The base station 170 includes a transmitter 252 and a receiver 254 coupled to one or more antennas 256. Only one antenna 256 is illustrated. One, some, or all of the antennas may alternatively be panels. The transmitter 252 and the receiver 254 may be integrated as a transceiver. The base station 170 further includes a processor 260 for performing operations including those related to preparing a transmission for downlink transmission to the UE 110, and those related to processing uplink transmissions received from the UE 110. Processing operations related to preparing a transmission for downlink transmission may include operations such as encoding, modulating, precoding (e.g. MIMO precoding), beamforming, and possibly generating the dynamic indication of carrier and/or BWP on which the UE 110 is to transmit control information, as described herein. Generating the dynamic indication may include encoding the dynamic indication. Processing operations related to processing uplink transmissions may include operations such as beamforming, demodulating, and decoding, e.g. possibly decoding the control information from the UE 110. The base station 170 further includes a scheduler 253, which may schedule the uplink resources to be allocated to UE 110 for uplink transmissions, and which may also schedule downlink transmissions. The base station 100 further includes a memory 258 for storing information and data.

Although not illustrated, the processor 260 may form part of the transmitter 252 and/or receiver 254. Also, although not illustrated, the processor 260 may implement the scheduler 253.

The processor 260, the scheduler 253, and the processing components of the transmitter 252 and receiver 254 may each be implemented by the same or different one or more processors that are configured to execute instructions stored in a memory (e.g. in memory 258). Alternatively, some or all of the processor 260, the scheduler 253, and the processing components of the transmitter 252 and receiver 254 may be implemented using dedicated circuitry, such as a programmed field-programmable gate array (FPGA), a graphical processing unit (GPU), or an application-specific integrated circuit (ASIC).

The UE 110 also includes a transmitter 201 and a receiver 203 coupled to one or more antennas 204. Only one antenna 204 is illustrated. One, some, or all of the antennas may alternatively be panels. The transmitter 201 and the receiver 203 may be integrated as a transceiver, e.g. transceiver 202 of FIG. 2. The UE 110 further includes a processor 210 for performing operations including those related to preparing a transmission for uplink transmission to the base station 170, and those related to processing downlink transmissions received from the base station 170. Processing operations related to preparing a transmission for uplink transmission may include operations such as encoding, modulating, precoding (e.g. MIMO precoding), beamforming, and possibly generating the control information described herein, e.g. which is transmitted in the uplink on the carrier and/or BWP dynamically indicated by the base station 170. Generating the control information may include encoding the control information. Processing operations related to processing downlink transmissions may include operations such as beamforming, demodulating, and decoding, e.g. possibly decoding the dynamic indication from the base station 170 that indicates the carrier and/or BWP on which the control information is to be transmitted by the UE 110.

Although not illustrated, the processor 210 may form part of the transmitter 201 and/or receiver 203.

The processor 210, and the processing components of the transmitter 201 and receiver 203 may each be implemented by the same or different one or more processors that are configured to execute instructions stored in a memory (e.g. in memory 208). Alternatively, some or all of the processor 210, and the processing components of the transmitter 201 and receiver 203 may be implemented using dedicated circuitry, such as a FPGA, a GPU, or an ASIC.

In some embodiments, the UE 110 might be one or more of the following: a smartphone; an Internet of Things (IoT) device; a wearable device; a vehicular device (e.g. a vehicle-mounted device, or vehicle on-board equipment); etc.

The base station 170 and the UE 110 may include other components, but these have been omitted for the sake of clarity.

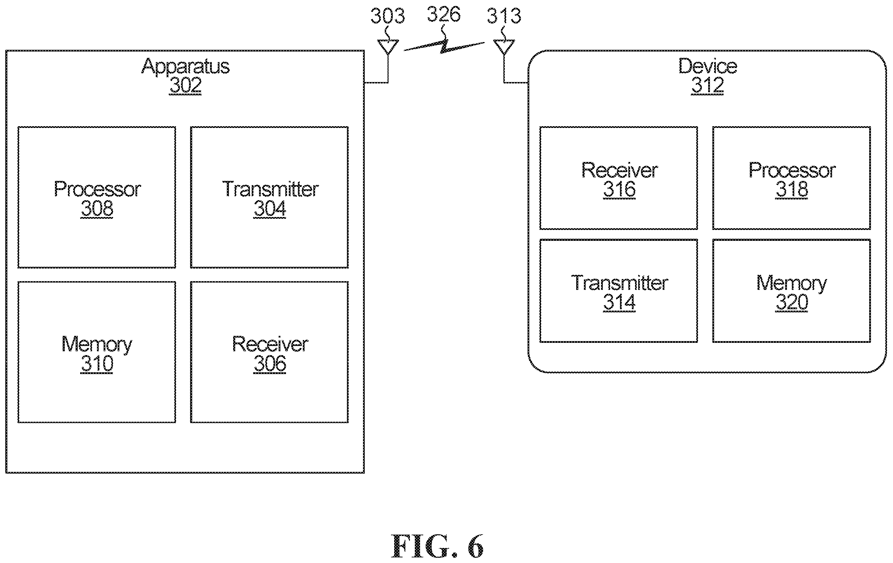

Embodiments are not limited to uplink and/or downlink communication. More generally, two devices may be wirelessly communicating with each other. FIG. 6 illustrates two devices wirelessly communicating, according to one embodiment. To more easily distinguish between the two devices, one will be referred to as apparatus 302 and the other will be referred to as device 312. The apparatus 302 may be a UE, e.g. UE 110. The device 312 may be a network device, e.g. a base station or a non-terrestrial network node, such as a drone. However, this is not necessary. For example, the apparatus 302 may be a UE or network device, and the device 312 may be a UE or a network device. The terms "apparatus" 302 and "device" 312 are simply used to more easily distinguish between the two entities. They may be the same type of entity, e.g. the apparatus 302 and the device 312 may both be UEs, or the apparatus 302 and the device 312 may both be network devices (e.g. base stations), although more generally this is not necessary.

In remaining embodiments, the device 312 is assumed to be one dynamically indicating, to the apparatus 302, the carrier and/or BWP on which the apparatus 302 is to transmit control information. The apparatus 302 is assumed to be the one receiving the dynamic information and transmitting the control information, to the device 312, on the carrier and/or BWP dynamically indicated.

The device 312 includes a transmitter 314 and receiver 316, which may be integrated as a transceiver. The transmitter 314 and receiver 316 are coupled to one or more antennas 313. Only one antenna 313 is illustrated. One, some, or all of the antennas may alternatively be panels. The device 312 further includes a processor 318 for generating the dynamic indication of the carrier and/or BWP and causing the transmitter 314 to transmit the dynamic indication in a wireless communication over wireless channel 326 to apparatus 302. The processor 318 may encode the dynamic indication and include it in dynamic signaling, e.g. include it for transmission in a control channel (e.g. in DCI), or include it along with data for transmission to the apparatus 302, e.g. in a data channel. The processor 318 may separately encode the dynamic indication from the data to be transmitted to the apparatus 302. The processor 318 may determine the carrier and/or BWP that is to be dynamically indicated, e.g. by selecting a carrier and/or BWP for which a time-frequency resource will be (or may be) available for the apparatus 302 to promptly transmit the control information. The processor 318 may also receive the wireless communication from the apparatus 302 that carriers the control information. The processor 318 may receive the communication at the input of the processor 318 and process it, e.g. perform decoding and extracting the control information. Although not illustrated, the processor 318 may form part of the transmitter 314 and/or receiver 316. The device 312 further includes a memory 320 for storing information and data.

The processor 318 and processing components of the transmitter 314 and receiver 316 may be implemented by the same or different one or more processors that are configured to execute instructions stored in a memory (e.g. in memory 320). Alternatively, some or all of the processor 318 and/or processing components of the transmitter 314 and/or receiver 316 may be implemented using dedicated circuitry, such as a programmed FPGA, a GPU, or an ASIC.

If the device 312 is base station 170, then the processor 318 may be or include processor 260, the transmitter 314 may be or include transmitter 252, the receiver 316 may be or include receiver 254, and the memory 320 may be or include memory 258.

The apparatus 302 includes a transmitter 304 and a receiver 306, which may be integrated as a transceiver. The transmitter 304 and receiver 306 are coupled to one or more antennas 303. Only one antenna 303 is illustrated. One, some, or all of the antennas may alternatively be panels.

The apparatus 302 further includes a processor 308 for processing the transmission received by the device 312, e.g. decoding the dynamic indication that indicates the carrier and/or BWP on which the apparatus is to transmit control information, and decoding data sent by the device 312. The processor 308 further generates the wireless transmission that transmits the control information, e.g. encodes the control information for transmission in the carrier and/or BWP dynamically indicated. Although not illustrated, the processor 308 may form part of the transmitter 304 and/or receiver 306. The apparatus 302 further includes a memory 310 for storing information and data.

The processor 308 and processing components of the transmitter 304 and/or receiver 306 may be implemented by the same or different one or more processors that are configured to execute instructions stored in a memory (e.g. in memory 310). Alternatively, some or all of the processor 308 and/or processing components of the transmitter 304 and/or receiver 306 may be implemented using dedicated circuitry, such as a programmed FPGA, a GPU, or an ASIC.

If the apparatus 302 is UE 110, then the processor 308 may be or include processor 210, the transmitter 304 may be or include transmitter 201, the receiver 306 may be or include receiver 203, and the memory 310 may be or include memory 208.

The transmitting device 302 and the receiving device 312 may include other components, but these have been omitted for the sake of clarity.

### Transmission on multiple carriers and/or BWPs

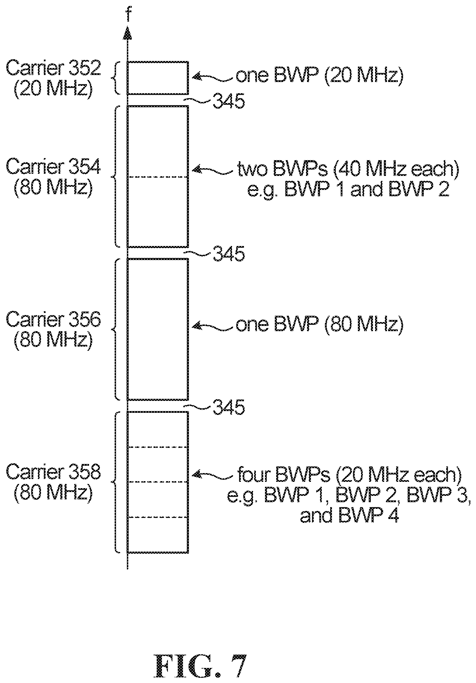

Wireless communication between the apparatus 302 and the device 312 may occur on one or more carriers and/or BWPs. A carrier may be characterized by its bandwidth and the center frequency of the carrier. A carrier may have one or more BWPs. As an example, FIG. 7 illustrates four carriers on a frequency spectrum of a wireless medium. The four carriers are respectively labelled carriers 352, 354, 356, and 358. The four carriers are contiguous with each other, except that a guard band 345 may be interposed between adjacent pairs of contiguous carriers. Carrier 352 has a bandwidth of 20 MHz and consists of one BWP. Carrier 354 has a bandwidth of 80 MHz and consists of two adjacent contiguous BWPs, each BWP being 40 MHz, and respectively identified as BWP 1 and BWP 2. Carrier 356 has a bandwidth of 80 MHz and consists of one BWP. Carrier 358 has a bandwidth of 80 MHz and consists of four adjacent contiguous BWPs, each BWP being 20 MHz, and respectively identified as BWP 1, BWP 2, BWP 3, and BWP 4.

The bandwidth of each BWP and/or the number of BWPs in a carrier may be configured on a device-specific basis, e.g. on a UE-specific basis. The carriers available for wireless communication might also or instead be configured on a device-specific basis. For example, apparatus 302 may be configured to wirelessly communicate with device 312 on the BWPs and carriers illustrated in FIG. 7, whereas another apparatus may be configured to wirelessly communicate with the device 312 on different BWPs and/or different carriers and/or BWPs of different bandwidths compared to apparatus 302.

When a carrier only has one BWP configured for communication on that carrier, e.g. as is the case for carrier 352 in FIG. 7, then that carrier might not be referred to as having a BWP. Communication on the carrier occurs using the bandwidth of the carrier.

In embodiments below, the device 312 dynamically indicates the carrier and/or BWP used by the apparatus 302 to transmit control information to the device 312. In some embodiments, the dynamic indication might only indicate a carrier and not a BWP, e.g. "carrier 352". If only a carrier is dynamically indicated for transmitting control information, and if that carrier happens to have multiple BWPs configured for the apparatus 302, then the specific BWP used by the apparatus 302 to transmit the control information may be fixed, semi-statically configured, scheduled, blindly detected, or dynamically indicated by the apparatus 302. In some embodiments, the dynamic indication might only indicate a BWP and not a carrier, e.g. "BWP 1". If only a BWP is dynamically indicated for transmitting control information, then the carrier associated with that BWP may be predefined, e.g. there might only be one carrier for transmitting control information, or there may be multiple carriers but the ID of the BWP maps to an associated carrier. In some embodiments, the dynamic indication may indicate both a carrier and a BWP, e.g. "(carrier 358, BWP 2)". One field of the dynamic indication may indicate the carrier and another field of the dynamic indication may indicate the BWP. For example, the dynamic indication may itself be transmitted by the device 312 in control information, e.g. physical layer control information (such as DCI) with each of the two fields being respective different fields in the control information.

In some embodiments, the device 312 semi-statically configures the carriers and/or BWPs that are "active" for transmitting control information, i.e. that may be dynamically indicated by the device 312. The dynamic indication then dynamically selects which one of those active carriers and/or BWPs is to be used by the apparatus 302 to transmit control information. For example, apparatus 302 may possibly communicate with the device 312 on any of the carriers and BWPs illustrated in FIG. 7, but the device 312 might only semi-statically configure carriers 352 and 354 for use by the apparatus 302 to transmit control information to the device 312. The device 312 may then dynamically select and dynamically indicate, to the apparatus 302, the specific carrier and/or BWP that the apparatus 302 is to use to transmit particular control information. For example, the dynamic indication may indicate BWP 2 of carrier 354. The semi-static configuration of active carriers and/or BWPs may be signaled via RRC signaling and/or via a medium access control (MAC) control element (CE) and/or via a MAC header. The dynamic indication of a specific one of the active carriers and/or BWPs may be signaled via dynamic signaling, e.g. signaling in a control channel, such as DCI, or the dynamic indication may be transmitted along with data from the device 312.

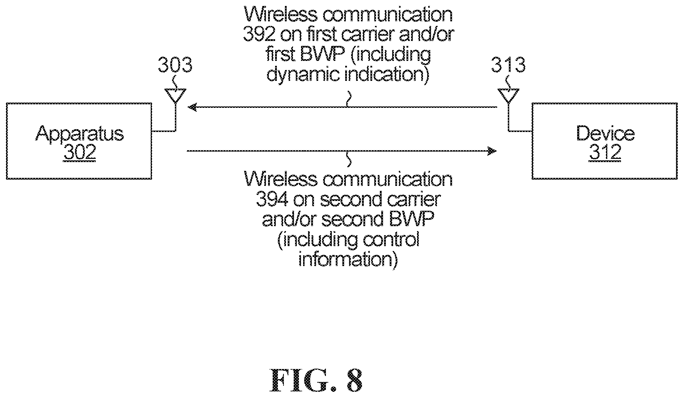

The carrier and/or BWP used by the device 312 to transmit the dynamic indication may be the same as or different from the carrier and/or BWP that is dynamically indicated and used by the apparatus 302 to transmit the control information. FIG. 8 illustrates device 312 and apparatus 302 exchanging two wireless communications. Device 312 transmits a first wireless communication 392 on a first carrier and/or a first BWP. The first wireless communication 392 includes a dynamic indication of a second carrier and/or a second BWP to be used by the apparatus 302 for transmitting control information to the device 312. Apparatus 302 subsequently transmits a second wireless communication 394 to the device 312 on the second carrier and/or the second BWP. The second wireless communication includes the control information. The first carrier and the second carrier may be the same, e.g. apparatus 302 and device 312 might only communicate with each other on carrier 354. The first carrier and the second carrier might be different, e.g. device 312 may transmit the dynamic indication on carrier 352, and the dynamic indication may indicate carrier 354. The first BWP and the second BWP may be the same, e.g. device 312 may transmit the dynamic indication on BWP 1 of carrier 354, and the dynamic indication may indicate BWP 1 of carrier 354. The first BWP and the second BWP might be different, e.g. device 312 may transmit the dynamic indication on BWP 1 of carrier 354, and the dynamic indication may indicate BWP 2 of carrier 354. The carrier and the BWP may both be different, e.g. device 312 may transmit the dynamic indication on BWP 1 of carrier 354, and the dynamic indication may indicate BWP 3 of carrier 358.

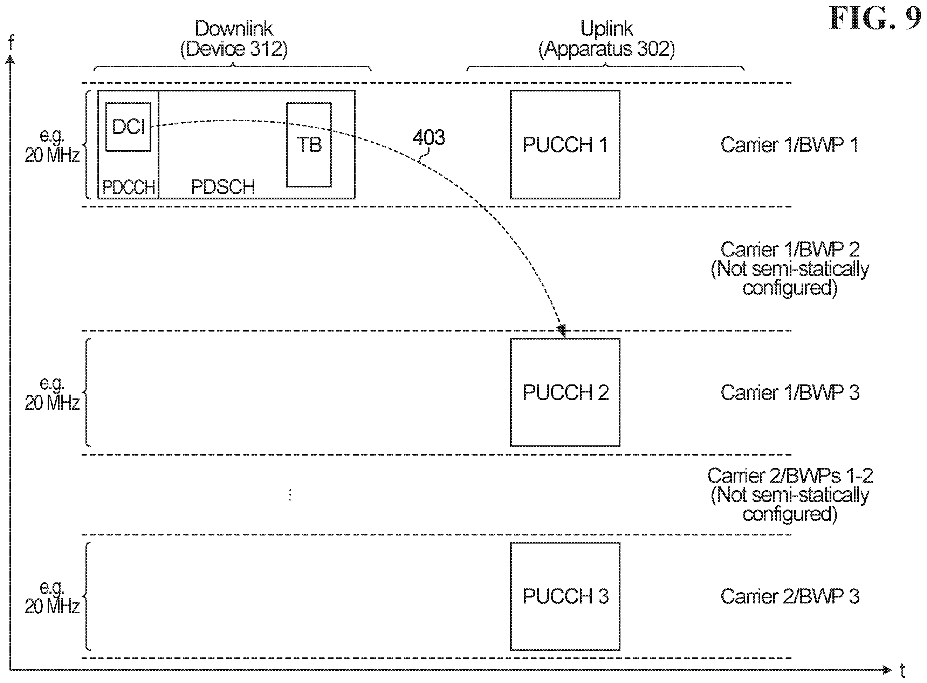

Some more specific examples will now be provided below. The examples described in relation to FIGs. 9 to 11 are in the context of uplink and downlink communications. The device 312 is assumed to be a network device, e.g. base station 170, and the apparatus 302 is assumed to be a UE, e.g. UE 110. The control information is assumed to be uplink control information, which may be HARQ feedback.

FIG. 9 illustrates dynamic indication of an uplink control channel for sending uplink control information, according to one embodiment. Two carriers are illustrated, respectively labelled carrier 1 and carrier 2. Each carrier has three BWPs. The illustrated carriers/BWPs represent all possible carriers/BWPs on which the apparatus 302 may send uplink control information to device 312. However, not all BWPs are activated. Specifically, in the example of FIG. 9, the device 312 has semi-statically activated only BWPs 1 and 3 of carrier 1 and BWP 3 of carrier 2, e.g. using higher-layer signaling such as RRC signaling. Only the activated carriers/BWPs are available to be dynamically selected, dynamically indicated, and used for uplink transmission of the uplink control information by apparatus 302.

In the example in FIG. 9, the device 312 transmits a downlink wireless communication that includes a control channel, which in this example is a physical downlink control channel (PDCCH). The downlink wireless communication also includes a data channel, which in this example is a physical downlink shared channel (PDSCH). DCI in the PDCCH schedules a transport block (TB) in the PDSCH. The DCI also includes a dynamic indication that dynamically indicates one of the activated carriers/BWPs for use by the apparatus 302 to transmit uplink control information. In the example, the DCI indicates BWP 3 of carrier 1, as shown by stippled line 403. For example, the device 312 may determine that there is (or may be) a time-frequency resource available for prompt uplink transmission of the control information in BWP 3 of carrier 1. The dynamic indication is transmitted by the device 312 and received by the apparatus 302. The apparatus 302 then transmits the uplink control information on the dynamically indicated carrier / BWP. In FIG. 9, the uplink control information is transmitted in an uplink control channel, which in this example is a physical uplink control channel (PUCCH). The time-frequency resource used to transmit the uplink control information in the PUCCH might also be scheduled by the DCI.

The dynamic indication may indicate the carrier/BWP explicitly, e.g. "(carrier 1, BWP 3)". An explicit indication may be in the form of an index that corresponds to the carrier and BWP. Alternatively, the dynamic indication may indicate the carrier/BWP implicitly, e.g. by indicating something that has a known association with the carrier/BWP. For example, the dynamic indication may indicate the identity of the uplink control channel, which has a known mapping to a particular carrier/BWP, e.g. the DCI may indicate "PUCCH 2", which is known by the apparatus 302 and device 312 to be on BWP 3 of carrier 1. As another example, the dynamic indication may indicate a frame identity (ID) that has a known mapping to a carrier/BWP.

In some embodiments, the control information sent by the apparatus 302 has an association with (e.g. is a response to or a reply to) a transmission sent by the device 312. For example, in FIG. 9 the DCI may schedule a transport block (TB) in a time-frequency resource of the PDSCH, as illustrated, and the dynamic indication in the DCI indicates the carrier/BWP used to transmit HARQ feedback corresponding to that TB. The DCI may also schedule the time-frequency resource on which the HARQ feedback is to be transmitted. The apparatus 302 attempts to decode the TB, and the control information transmitted in the dynamically indicated carrier/BWP is the HARQ feedback corresponding to the TB.

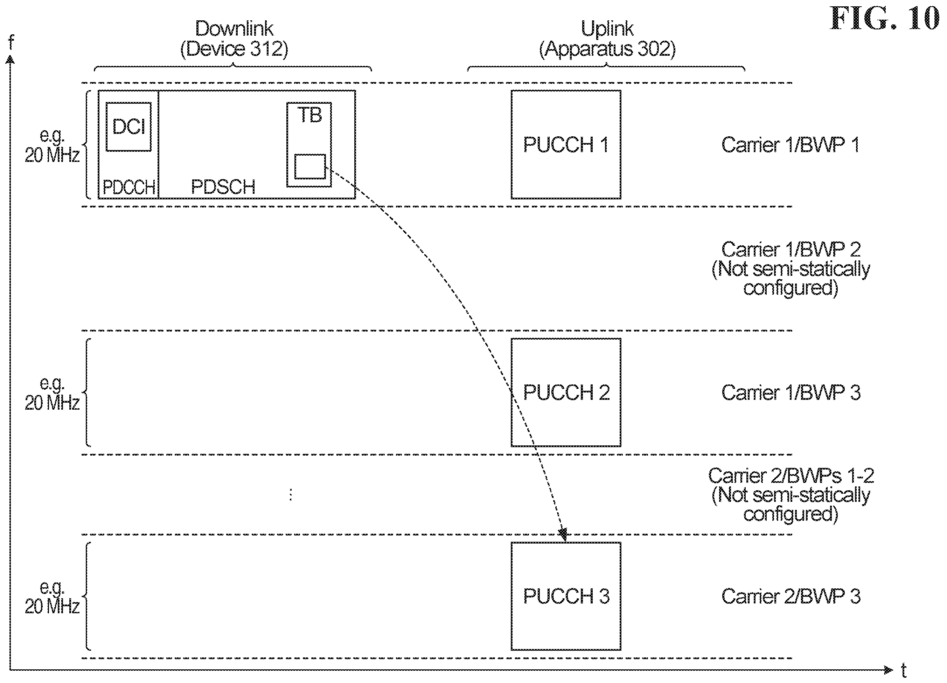

FIG. 10 illustrates a variation of FIG. 9 in which the dynamic indication is not included in a control channel, but is instead included in the data channel, e.g. as part of the transport block (TB). The dynamic indication may be encoded separately from the data in the TB, or the data in the TB and the dynamic indication may be encoded together. In the example in FIG. 10, the dynamic indication indicates BWP 3 of carrier 2 for the apparatus 302 to transmit the uplink control information. The dynamic indication may be explicit or implicit, as explained above. Transmitting the dynamic indication in a sharing channel, e.g. in a data channel, such as in FIG. 10, rather than in a physical control channel, may save overhead of the physical control channel. In some such embodiments the physical control channel may be omitted. In some embodiments, a variation in which the dynamic indication is not sent in a physical control channel, such as the embodiment in FIG. 10, may be used for configured grant ("grant-free") / DCI-free / scheduling-free transmissions.

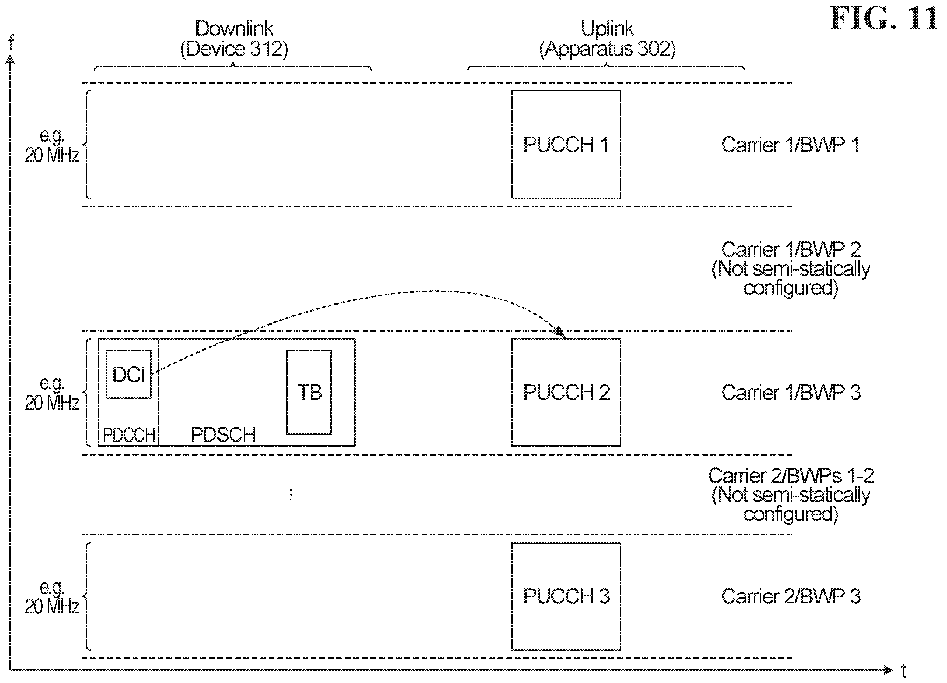

The carrier and/or BWP used by the device 312 to send its wireless communication might also change, e.g. possibly on a dynamic basis. FIG. 11 illustrates a variation of FIG. 9 in which the downlink transmission is on BWP 3 of carrier 1, e.g. because the device 312 dynamically determined that there is a time-frequency resource available for transmission of the TB on BWP 3 of carrier 1.

### Example implementations in frame structures

A frame structure is a feature of a wireless communication physical layer that defines a time domain signal transmission structure, e.g. to allow for timing reference and timing alignment of basic time domain transmission units. Wireless communication between device 312 and apparatus 302 may occur on time-frequency resources governed by a frame structure. The frame structure may sometimes instead be called a radio frame structure. Depending upon the frame structure and/or configuration of frames in the frame structure, frequency division duplex (FDD) and/or time-division duplex (TDD) and/or full duplex (FD) communication may be possible. FDD communication is when transmissions in different directions (e.g. uplink vs. downlink) occur in different frequency bands. TDD communication is when transmissions in different directions (e.g. uplink vs. downlink) occur over different time durations. FD communication is when transmission and reception occurs on the same time-frequency resource, i.e. a device can both transmit and receive on the same frequency resource concurrently in time.

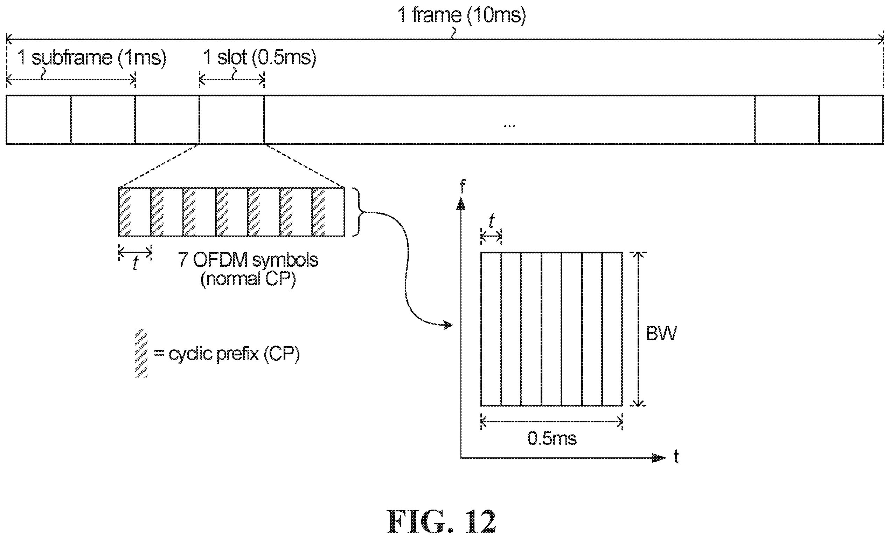

One example of a frame structure is illustrated in FIG. 12. The frame structure in FIG. 12 is one example type of frame structure in LTE. The frame has the following structure: each frame is 10ms in duration; each frame has 10 subframes, which are each 1ms in duration; each subframe includes two slots, each of which is 0.5ms in duration; each slot is for transmission of 7 OFDM symbols (assuming normal CP); each OFDM symbol has a symbol duration t and a particular bandwidth (or partial bandwidth or bandwidth partition) related to the number of subcarriers and subcarrier spacing. The frame structure of FIG. 12 places limitations on time domain scheduling and duration of symbols, e.g. time domain granularity is limited by OFDM symbol duration, and limits are placed on the length of the CP. Although not directly shown in FIG. 12, the frame structure of FIG. 12 also has a limitation in that it does not support FD communications.

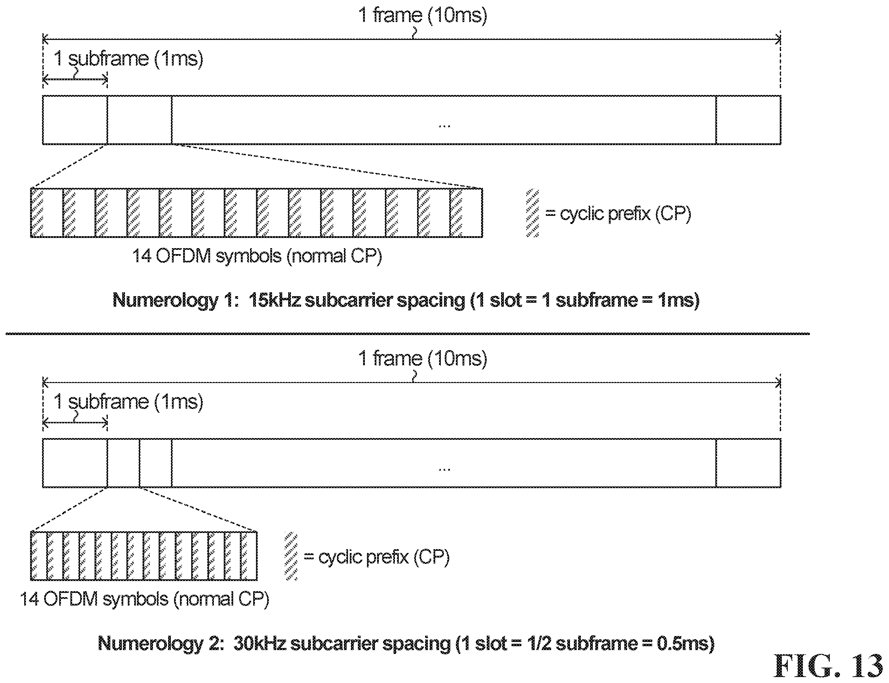

Another example of a frame structure is that defined in NR. In NR, multiple subcarrier spacings are supported, each subcarrier spacing corresponding to a respective numerology. The frame structure depends on the numerology, but the frame length is set at 10ms, and consists of ten subframes of 1ms each. A slot is defined as 14 OFDM symbols (assuming normal CP), and slot length depends upon the numerology. For example, FIG. 13 illustrates the NR frame structure for normal CP 15 kHz subcarrier spacing ("numerology 1") and the NR frame structure for normal CP 30 kHz subcarrier spacing ("numerology 2"). For 15 kHz subcarrier spacing a slot length is 1ms, and for 30 kHz subcarrier spacing a slot length is 0.5ms. Although not shown in FIG. 13, the NR frame structure also has a limitation in that it does not support FD communications. Only FDD or TDD communications are supported.

Dynamic indication of carrier and/or BWP to be used by the apparatus 302 for transmitting control information may be implemented in wireless communication systems that have communications governed by a frame structure. In some embodiments, the dynamic indication of carrier and/or BWP may be implicitly indicated by identifying a frame or frame structure on which the control information is to be transmitted. The identified frame or frame structure has a known association with a particular carrier and/or BWP. For example, a frame number, frame structure ID, or other ID may be dynamically indicated to the apparatus 302, and the apparatus 302 may then transmit the control information in the identified frame or frame structure. The identified frame or frame structure is associated with a particular carrier and/or BWP, which is known by both the apparatus 302 and the device 312. Therefore, the carrier and/or BWP may be dynamically indicated by indicating an ID associated with a frame or frame structure.

In some embodiments, the dynamic indication may be implemented in a frame structure that may be more flexible than the example frame structures discussed above in relation to FIGs. 12 and 13. For example, in some communication systems there may be defined two separate and independent frame structures: a frame structure for reception and a frame structure for transmission. "Reception" and "Transmission", as used herein, is from the perspective of the apparatus 302, e.g. which may be a UE. For example, in a UE / base station communication in which the apparatus 302 is UE 110 and the device 312 is base station 170, reception is downlink and transmission is uplink. By defining separate frame structures for transmission and reception, the following technical benefit may be achieved: the frame structure for reception (e.g. downlink) may be configured independently from the frame structure for transmission (e.g. uplink), which can allow for increased flexibility to accommodate different application scenarios. For example, the subcarrier spacing and/or frame duration and/or number of symbols, slots, and/or subframes in a frame may be set differently for uplink and downlink communications. FDD, TDD, and FD communications may be supported.

Embodiments involving a frame structure for reception and a frame structure for transmission will be discussed below.

The frame structure for reception will be called a reception frame structure, and a frame of the reception frame structure will be referred to as a reception frame. The frame structure for transmission will be called a transmission frame structure, and a frame of the transmission frame structure will be referred to as a transmission frame. Each frame of the reception frame structure may be configured to have a plurality of time durations in which a communication direction is configured. In some embodiments, at least one of the time durations of a reception frame is configured for receiving transmissions (e.g. in the downlink), and one or more of the other time durations may be flexible. A flexible time duration is a time duration in which the communication direction may be configured as transmission and/or reception, possibly on an apparatus-specific basis. For example, apparatus 302 may be configured to either transmit or receive, or both transmit and receive during some or all of the flexible time duration, depending upon the capabilities of the apparatus 302. Apparatus-specific control signaling may be used to configure, for each apparatus, whether that apparatus is to transmit or receive, or both transmit and receive, or do neither for a particular flexible time duration in a reception frame. Similarly, a transmission frame of the transmission frame structure may also be configured to have a plurality of time durations in which a communication direction is configured. In some embodiments, at least one of the time durations of a transmission frame is configured for sending transmissions (e.g. in the uplink), and one or more of the other time durations may be flexible. Apparatus-specific control signaling may be used to configure, for each apparatus, whether the apparatus is to transmit or receive, or both transmit and receive, or do neither for a particular flexible time duration in a transmission frame.

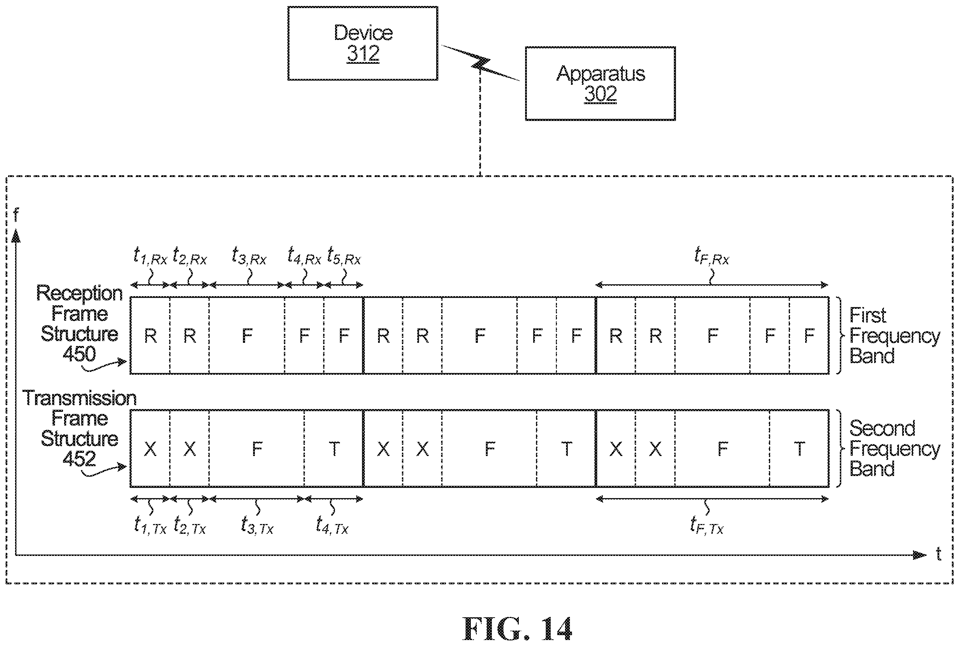

FIG. 14 illustrates an example reception frame structure 450 and transmission frame structure 452, according to one embodiment. As mentioned above, "reception" and "transmission" are from the perspective of the apparatus 302. The wireless communications between device 312 and apparatus 302 are governed by the two separate frame structures. Three frames of the reception frame structure 450 are illustrated in FIG. 14, each frame having a same duration *t_{F,Rx}*. A frame of the reception frame structure 450 will be referred to as a reception frame. Each reception frame includes five time durations in which a respective communication direction is configured. The first time duration *t*_{1,*Rx*} is configured for reception, i.e. for a transmission sent by device 312 and received by apparatus 302, as indicated by the letter "R". The second time duration *t*_{2,*Rx*} is also configured for reception, as indicated by the letter "R". In the reception time durations, i.e. in time durations 1 and 2, only transmission from device 312 is permitted. Apparatus 302 may not send a transmission to device 312 on the reception frame during time durations 1 and 2. The third time duration *t*_{3,*Rx*} is configured as flexible, as indicated by the letter "F". In a flexible time duration, the direction of communication (transmission versus reception) is flexible and may be configured on an apparatus-specific basis. For example, during some or all of a flexible time duration, the apparatus 302 may be configured for reception (i.e. receive a transmission from the device 312), or for transmission (i.e. send a transmission to the device 312), or for both reception and transmission, depending upon the capabilities of the apparatus 302. In some or all of a flexible duration, the apparatus 302 may sometimes be configured to neither transmit nor receive. In some implementations, the apparatus 302 may be configured to switch reception/transmission within a flexible duration, e.g. receive a transmission at the start of the flexible duration, followed by a switching gap, followed by sending a transmission just prior to the end of the flexible duration.

The fourth time duration *t*_{4,*Rx*} of the reception frame is also configured as flexible, as indicated by the letter "F". The fifth time duration *t*_{5,*Rx*} is also configured as flexible, as indicated by the letter "F".

The direction of communication respectively configured for each time duration in a frame defines a communication direction pattern for the frame. For example, the communication direction pattern for a reception frame in FIG. 14 is RRFFF.

Three frames of the transmission frame structure 452 are also illustrated in FIG. 14, each frame having a same duration *t_{F,Tx}*. A frame of the transmission frame structure 452 will be referred to as a transmission frame. The transmission frames are illustrated as time aligned with the reception frames in FIG. 14, i.e. the start of each transmission frame is illustrated as occurring at the same time as the start of a reception frame. In general, this might not be the case. Any timing offset (e.g. timing advance) between a reception frame and a transmission frame is omitted from the drawings for ease of explanation.

Each transmission frame includes four time durations in which a respective communication direction is configured. The first time duration *t*_{1,*Tx*} is configured as reserved, as indicated by the letter "X". This means that neither a transmission nor a reception can occur in the transmission frame during time duration *t*_{1,*Tx*}. Similarly, the second time duration *t*_{2,*Tx*} is also configured as reserved, as indicated by the letter "X". The third time duration *t*_{3,*Tx*} is configured as flexible, as indicated by the letter "F". In a flexible time duration, the direction of communication (transmission versus reception) is flexible and may be configured on an apparatus-specific basis. The fourth time duration *t*_{4,*Tx*} of the transmission frame is configured for transmission, i.e. for transmission from the apparatus 302 to the device 312, as indicated by the letter "T". In the fourth time duration, only a transmission is permitted on the transmission frame. The apparatus 302 may not receive a transmission from device 312 on the transmission frame in time duration 4. In some embodiments, a time duration configured as a transmission duration "T" may be reserved for the apparatus 302 to transmit important information that the device 312 needs to receive, in which case the corresponding time duration in the reception frame structure 450 may be reserved "X" to prohibit transmission/reception on the reception frame during that time duration to help mitigate interference.

As mentioned above, the direction of communication respectively configured for each time duration in a frame defines a communication direction pattern for the frame. The communication direction pattern for a transmission frame in FIG. 14 is XXFT.

In the example of FIG. 14, time durations 1 and 2 of a reception frame are timealigned with time durations 1 and 2 of a corresponding transmission frame. Also, in the example of FIG. 9, no transmission can occur in time durations 1 and 2 of the transmission frame, as indicated by "X". This helps protect the transmission from device 312 in time durations 1 and 2 of the reception frame, because interference from competing transmission is mitigated. However, if the first and second frequency bands are completely separate (no frequency overlap), as illustrated in FIG. 14, then it might not be necessary to prohibit transmissions on time durations 1 and 2 of the transmission frame because the transmissions would be on different frequency resources from the transmissions in the reception frame. Although the first and second frequency bands are illustrated as non-overlapping, they may partially or fully overlap depending upon the configuration.

In FIG. 14, the frame duration of a reception frame is equal to a frame duration of a transmission frame, i.e. *t_{F,Rx}* = *t_{F,Tx}* . However, in general this need not be the case. Also, a frame duration may change between frames. For example, the time duration *t_{F,Rx}* of one reception frame may be different from the time duration *t_{F,Rx}* of another reception frame in the reception frame structure 450. Similarly, the time duration *t_{F,Tx}* of one transmission frame may be different from the time duration *t_{F,Tx}* of another transmission frame in the transmission frame structure 452.

In FIG. 14, each reception frame has the same configured time durations: five time durations, each of a particular length, and each reception frame configured with the communication direction pattern RRFFF. However, in general this need not be the case. Different reception frames may have a different number of time durations and/or time durations of different lengths, and/or the communication direction pattern configuration may change between reception frames. The same comment applies to the frames of the transmission frame structure 452. That is, different transmission frames may have a different number of time durations and/or time durations of different lengths, and/or the communication direction pattern configuration may change between transmission frames. Some or all of the transmission frames might not have a reserved time duration "X" and/or might not necessarily have a dedicated transmission time duration "T" (i.e. the presence of "X" and "T" are optional in the transmission frame structure 452). However, in some embodiments a frame of the transmission frame structure 452 does not include a dedicated reception time duration "R", as this is a feature of the reception frame structure 450 and serves to distinguish the reception frame structure 450 from the transmission frame structure 452. In some embodiments, the reception frame structure 450 must include at least one frame with a dedicated reception time duration "R". In some embodiments, the reception frame structure 450 must include at least one frame with a dedicated reception time duration "R" and a dedicated flexible time duration "F". In some embodiments, the reception frame structure 450 cannot include a dedicated transmission time duration "T". In some embodiments, "R" and "T" cannot be mixed in a same frame structure, i.e. whether it be the reception frame structure 450 or the transmission frame structure 452, there cannot be, within a single same frame structure, both a dedicated reception time duration "R" and a dedicated transmission time duration "T".

In the example of FIG. 14, the transmission and reception frame structures 450 and 452 are configured to be on separate non-overlapping frequency bands, which are labelled in FIG. 14 as the "first frequency band" and the "second frequency band". In general, the first and second frequency bands may partially or fully overlap. In general, the first and second frequency bands may be on a same carrier or on different carriers. If on the same carrier, the first and second frequency bands may be on the same BWP or a different BWP of the same carrier. In general, each frame and/or each frame structure may be associated with a particular carrier and/or BWP. The carriers and/or BWPs associated with different frames or frame structures may be the same or different. If two frame structures are each associated with the same carrier and same BWP, then the two frame structures may partially or fully overlap in the time-frequency domain.

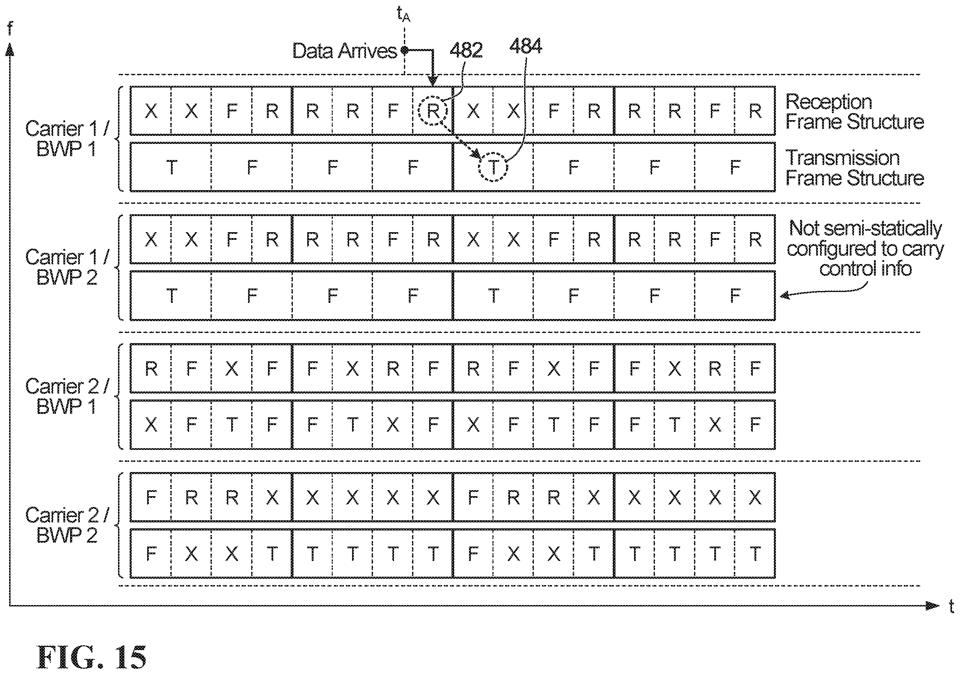

Examples of dynamic indication of a carrier and/or BWP for transmitting control information, in a system having separate reception and transmission frame structures, will now be described in relation to FIGs. 15 to 23.

FIG. 15 illustrates two carriers 1 and 2, each having two BWP 1 and 2. A reception frame structure and a transmission frame structure is illustrated as being present on each BWP of each carrier. As shown in examples later, this is not necessary. On each BWP of each carrier, the reception frame structure is illustrated as non-overlapping with the transmission frame structure in the frequency domain. In general, on a BWP or carrier having both a transmission frame structure and a reception frame structure, the transmission frame structure and the reception frame structure may partially or fully overlap in the frequency domain. Each reception frame and each transmission frame on each carrier/BWP is illustrated as having four time durations in which the communication direction may be configured. Example communication direction patterns are also illustrated for the reception and transmission frames. For example, the first reception frame on BWP 1 of carrier 1 has the communication direction pattern "XXFR". Although each reception frame and each transmission frame have four time durations in which the communication direction may be configured, the subcarrier spacing (SCS) of the transmission frame on BWP 1 of carrier 1 is half the SCS of the reception frame on BWP 1 of carrier 1, and therefore a transmission frame is twice the length of a reception frame on BWP 1 of carrier 1. The same is true for BWP 2 of carrier 1. This is only an example.

Data arrives at device 312, at time *t_{A}*, for transmission to apparatus 302. The data may be low latency data. The device 312 dynamically selects a reception frame that has a reception duration available shortly after time *t_{A}*. The selection is dynamic because it was not known if/when data was going to arrive at device 312 for transmission, e.g. time *t_{A}* may be random. The reception frame on BWP 1 of carrier 1 is dynamically selected in FIG. 15, although the reception frame on BWP 2 of carrier 1 could have been selected instead. A reception frame on carrier 2 is not selected because a reception duration is not available on either BWP of carrier 2 shortly after time *t_{A}*.

The data is transmitted by the device 312, to the apparatus 302, in the reception duration in the reception frame on BWP 1 of carrier 1, as indicated by circle 482. Also transmitted in that reception duration is a dynamic indication of the carrier/BWP to be used by the apparatus 302 to transmit control information to the device 312. The control information may be associated with (e.g. in response or in reply to) the transmission sent by the device 312 in the reception duration 482. For example, the control information may be HARQ feedback corresponding to the data transmitted by device 312 and received by apparatus 302 during the reception duration 482. The carrier/BWP to be used by the apparatus 302 to transmit the control information is selected prior to the device 312 transmitting the data, as follows. The device 312 dynamically selects a transmission frame that has a transmission duration shortly after the data is to be received at apparatus 302. The selection is dynamic because the selection depends upon the reception duration selected, which ultimately depends upon time *t_{A}*, i.e. when the data arrived at the device 312 for transmission to the apparatus 302. The transmission frame on BWP 1 of carrier 1 is dynamically selected in FIG. 15, as indicated by circle 484. The dynamic indication may explicitly indicate BWP 1 of carrier 1, e.g. "(carrier 1, BWP 1)". The dynamic indication may instead implicitly indicate BWP 1 of carrier 1 by indicating an ID associated with the transmission frame or transmission frame structure, which has a known association with BWP 1 of carrier 1. For example, each transmission frame structure may have a separate ID that uniquely maps to a respective carrier/BWP, such that indicating the transmission frame structure ID indicates the carrier/BWP for transmitting the control information. The apparatus 302 then transmits the control information during transmission duration T of the transmission frame of the transmission frame structure on BWP 1 of carrier 1, as shown by circle 484. In some embodiments, the time-frequency resource in the transmission duration may be scheduled by the device 312, or it may be pre-configured.

In some embodiments, only a subset of the transmission frame structures may be active, e.g. semi-statically configured, to possibly be used by the apparatus 302 to transmit the control information. For example, in FIG. 15 the transmission frame structure in BWP 2 of carrier 1 is not configured to be utilized for transmission of control information by apparatus 302. Even though there is a transmission duration in BWP 2 of carrier 1 equal in time to the transmission duration in BWP 1 of carrier 1, the transmission duration in BWP 2 of carrier 1 cannot be dynamically indicated. Similarly, or instead, it might be the case that only certain carriers and/or BWPs may be semi-statically configured to possibly be used to transmit data by device 312 to apparatus 302. For example, only some of the illustrated reception frame structures may be activated for use by the device 312, e.g. via semi-static signaling such as RRC signaling or MAC CE. The configuration may also need to be transmitted to the apparatus 302.

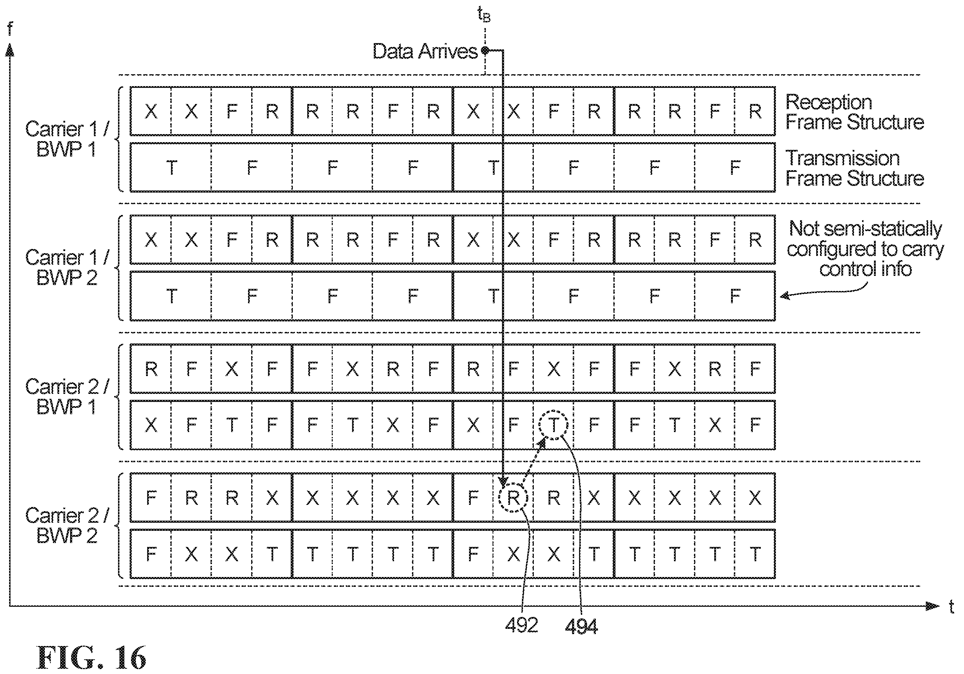

In the example in FIG. 15, the same carrier and BWP is used by the apparatus 302 to receive the data (in reception duration 482) and to transmit the control information (in transmission duration 484). This is only an example. FIG. 16 illustrates a variation of FIG. 15 in which the data arrives at another time *t_{B}*, therefore causing the data and dynamic indication to be transmitted by device 312 during circle 492 and the control information to be transmitted by apparatus 302 during circle 494. In FIG. 16, the dynamic indication and the control information are carried on different BWPs, but on the same carrier. In other embodiments, the dynamic indication and the control information could be carried on different carriers.

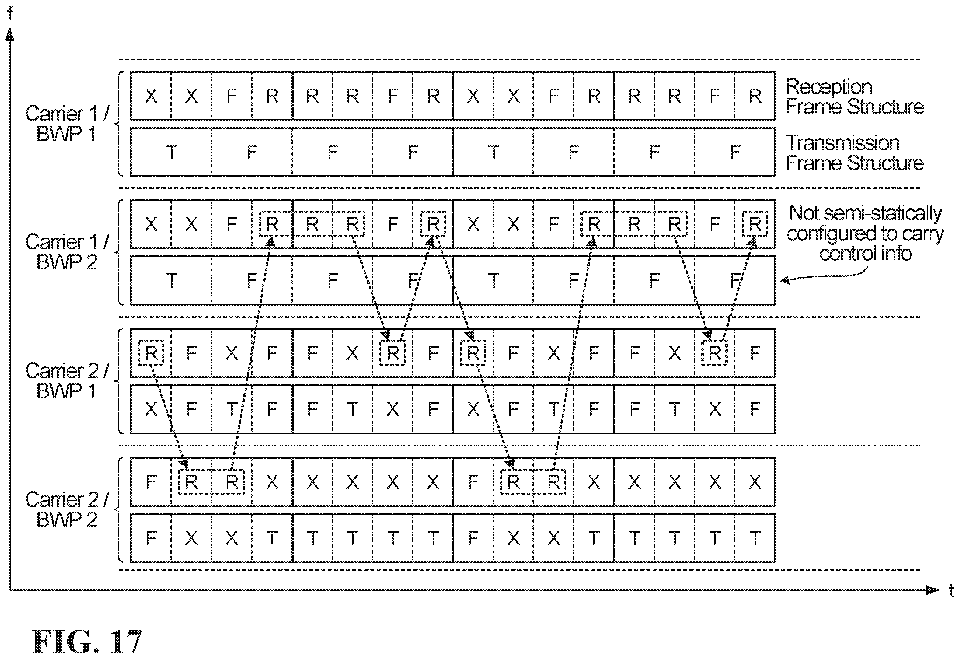

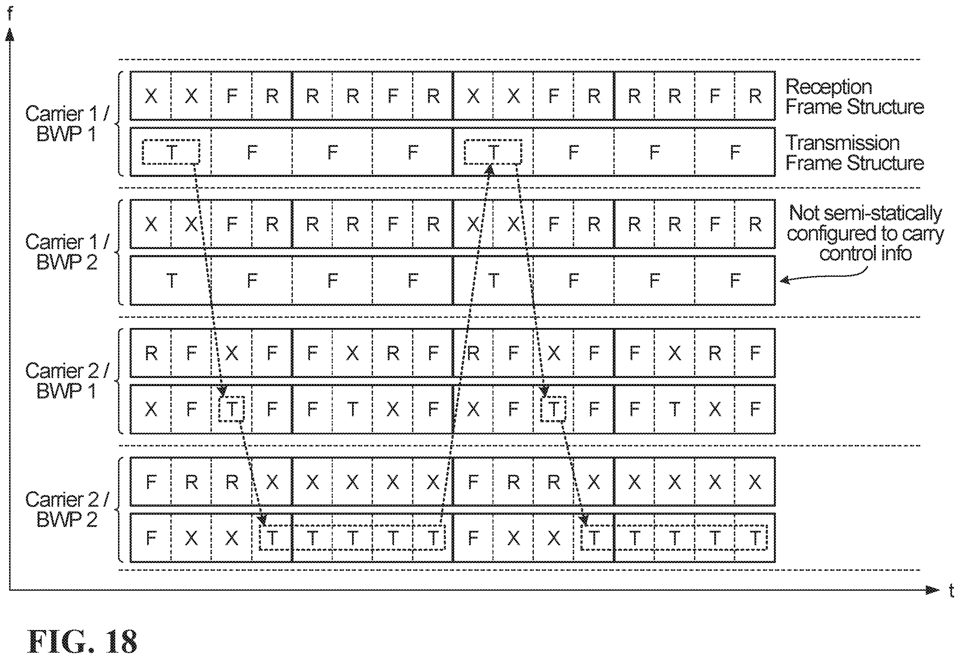

In some embodiments, the communication direction patterns of each of the frame structures on each of the different carriers/BWPs may be configured so that at any time a reception duration or flexible duration in a reception frame may always be available on one or more carriers/BWPs for the device 312 to transmit data to the apparatus 302. Such is the case for the examples in FIGs. 15 and 16. As shown in FIG. 17, a reception duration "R" is always available on a reception frame in at least one of the carriers/BWPs. In some embodiments, the communication direction patterns of each of the frame structures on each of the different carriers/BWPs may be configured so that at any time a transmission duration or flexible duration in a transmission frame may always be available on one or more carriers/BWPs for the apparatus 302 to transmit the control information. Such is the case for the examples in FIGs. 15 and 16. As shown in FIG. 18, a transmission duration "T" is always available on a transmission frame in at least one of the carriers/BWPs. The benefit of having the communication direction patterns configured in the way illustrated in FIGs. 17 and 18 is as follows: no matter when data arrives for transmission by device 312, the device 312 can immediately schedule the data for transmission to apparatus 302, and the device 312 can dynamically indicate a carrier and/or BWP for the apparatus 302 to transmit the corresponding control information during a transmission duration that is immediately after the data arrives and is decoded by the apparatus 302. For example, when data related to a URLLC service arrives at device 312 for transmission to apparatus 302, the device 312 may immediately choose a carrier/BWP that is associated with a reception frame structure having an available reception resource for the apparatus 302 to receive the data so that the data can be transmitted/received quickly. The device 312 may also then immediately choose a carrier/BWP which is associated with a transmission frame structure having an available transmission resource for the apparatus 302 to promptly transmit the HARQ feedback corresponding to the data within the delay limit. The device 312 may dynamically indicate, to the apparatus 302, the carrier/BWP of the chosen transmission frame structure.

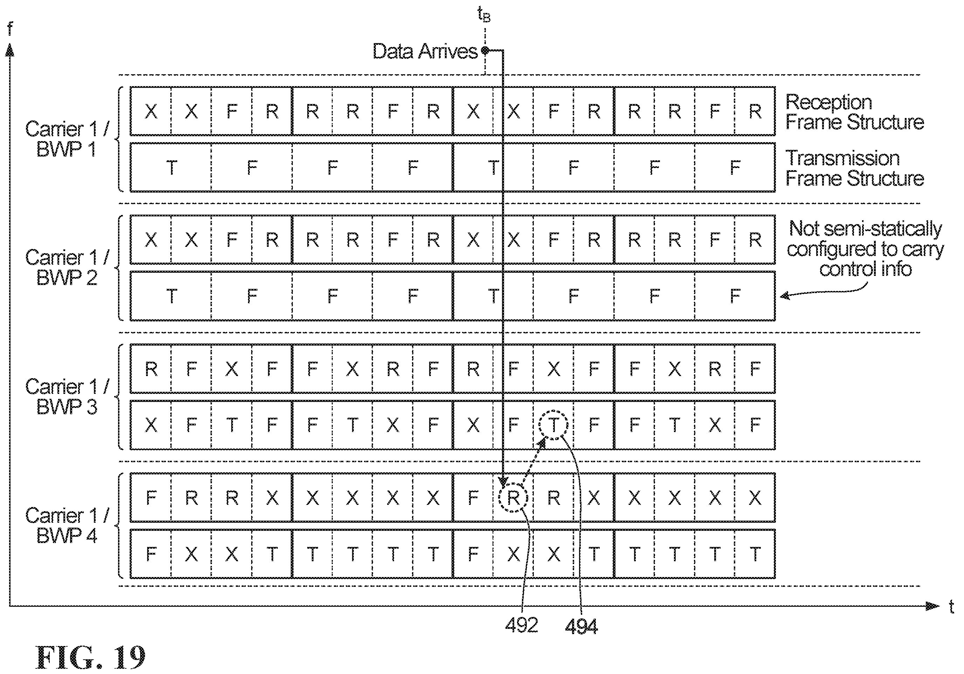

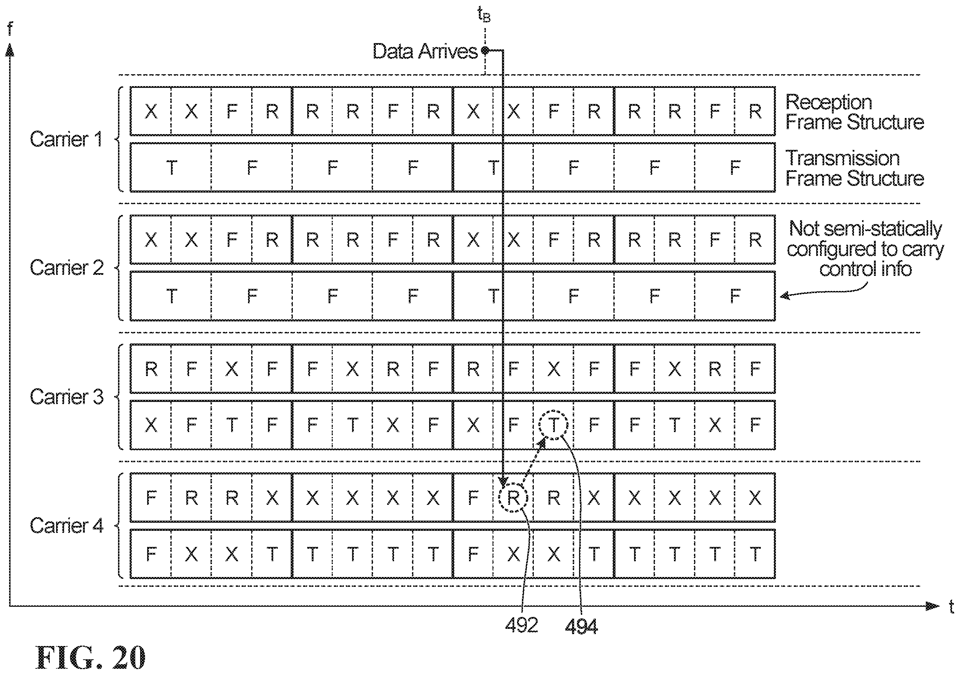

FIG. 19 illustrates a variation of FIG. 16 in which there is one carrier having four BWPs. FIG. 20 illustrates a variation of FIG. 16 in which there are no BWPs per se, but there are different carriers. The purpose of FIGs. 19 and 20 is to illustrate the principle that the dynamic indication of carrier and/or BWP to be used by the apparatus 302 to transmit control information may operate regardless of whether the system has different BWPs on a same carrier (like FIG. 19) or different carriers (like FIG. 20) or different carriers and different BWPs (like FIGs. 15 and 16).

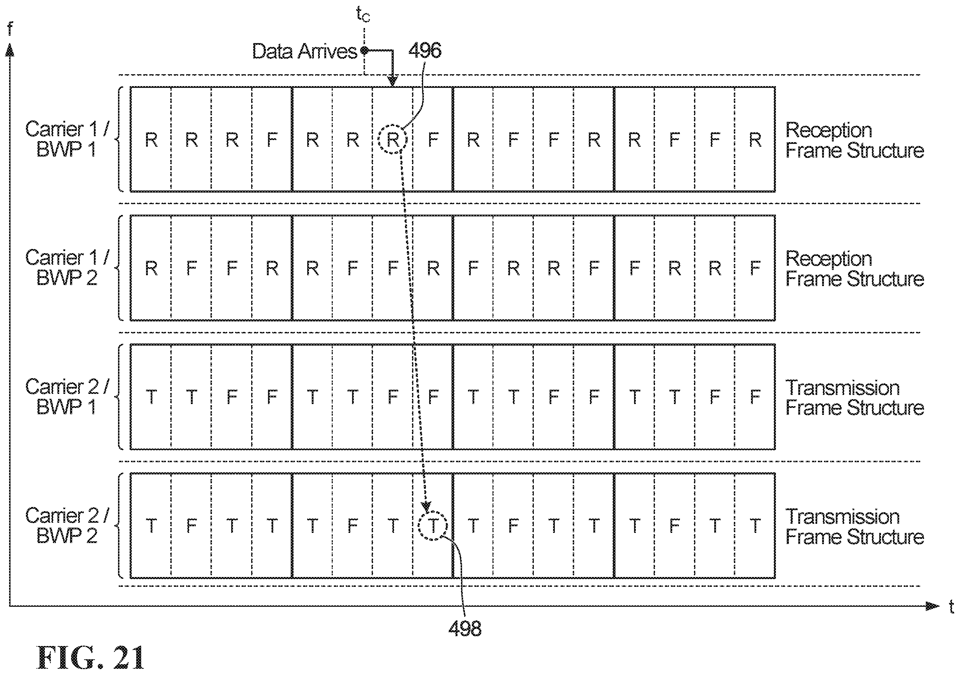

In the embodiments in FIGs. 15 to 20, both a reception frame structure and a transmission frame structure exists on each carrier/BWP. This is not necessary. For example, FIG. 21 illustrates a variation in which each carrier/BWP is associated with a respective reception frame structure or transmission frame structure, but not both. In the example in FIG. 21, data arrives for transmission by device 312 at time *t_{C}*. The device 312 dynamically selects the next available reception duration having an available time-frequency resource for transmitting the data. The reception duration selected is indicated by circle 496. It is in the reception frame structure on BWP 1 of carrier 1. The device 312 then dynamically selects the next available transmission duration that is subsequent to the selected reception duration and that does or may have an available time-frequency resource for the apparatus 302 to transmit control information, e.g. HARQ feedback corresponding to the data. The transmission duration selected is indicated by circle 498. It is in the transmission frame structure on BWP 2 of carrier 2. The dynamic indication of BWP 2 of carrier 2 is transmitted by device 312 in the reception duration 496, e.g. in control information (such as in a control channel) in the reception duration 496, or with the data (e.g. in a data channel during reception duration 496). The dynamic indication may explicitly indicate the carrier/BWP, e.g. "(carrier 2, BWP 2)". The dynamic indication may instead implicitly indicate the carrier/BWP by indicating an ID associated with the transmission frame or transmission frame structure, which has a known mapping to a carrier/BWP, e.g. "Transmission frame structure 2" which is known through a mapping to be the transmission frame structure on BWP 2 of carrier 2.

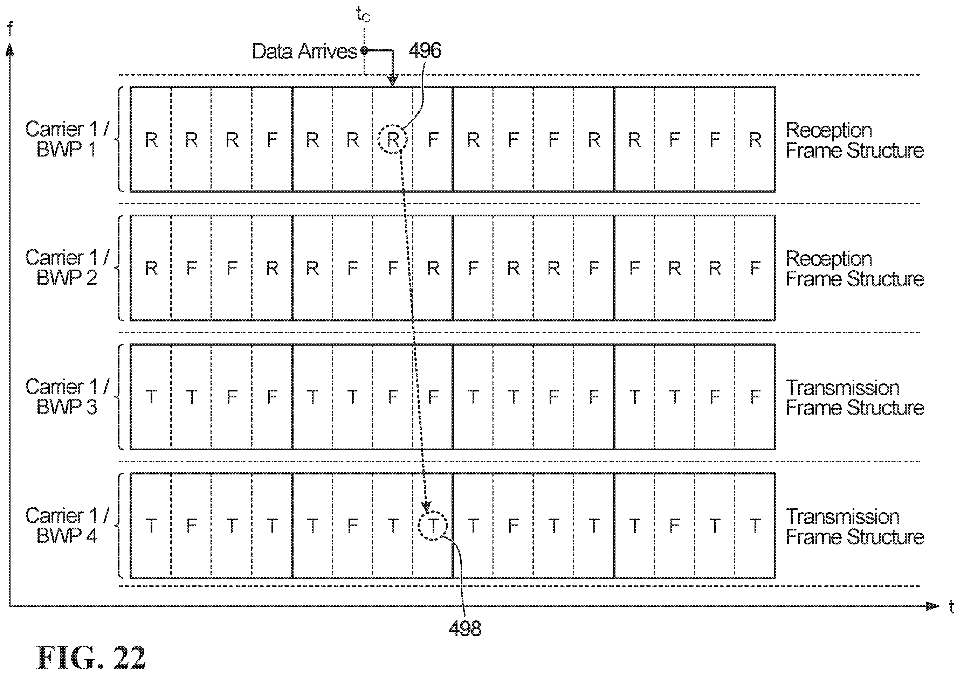

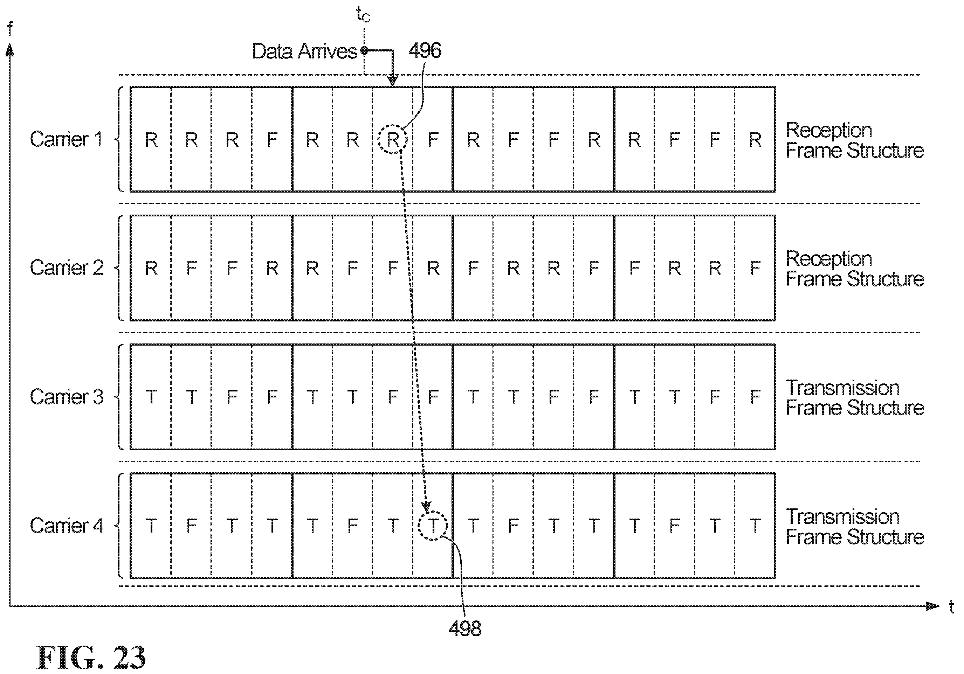

FIG. 22 illustrates a variation of FIG. 21 in which each reception and transmission frame structure is on its own respective different BWP on a same carrier. FIG. 23 illustrates a variation of FIG. 21 in which each reception and transmission frame structure is on its own respective different carrier.

FIGs. 15 to 23 illustrate examples in which dynamic indication of a carrier and/or BWP for transmitting control information may be implemented in a flexible frame structure. However, even in communication systems having frame structures that are not as flexible, e.g. in NR and LTE, the dynamic indication may be implemented. Moreover, as discussed earlier, the dynamic indication is independent of frame structures. For example, the examples described earlier in relation to FIGs. 9 to 11 are discussed without reference to a particular frame structure, if any, used for the transmission and reception.

### Example methods

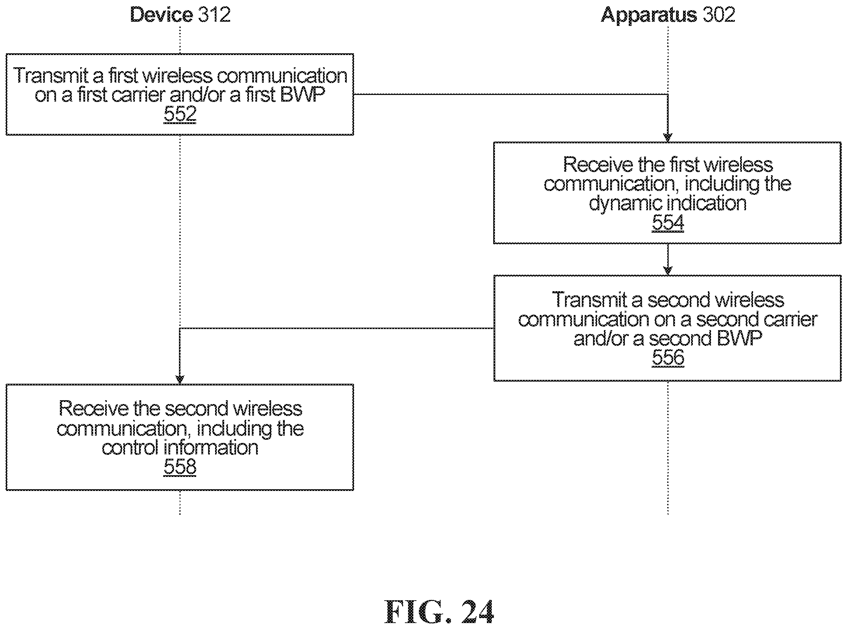

FIG. 24 is a block diagram of a method performed by device 312 and apparatus 302, according to one embodiment. The device 312 may be a network device, e.g. a terrestrial node, such as a base station mounted on a fixed structure, or a non-terrestrial node, e.g. a drone or a satellite. The device 312 may instead be a UE. Similarly, the apparatus 302 may be a network device or a UE.

At step 552, the device 312 transmits a first wireless communication on a first carrier and/or a first BWP. At step 554, the apparatus 302 receives the first wireless communication on the first carrier and/or the first BWP. The first wireless communication includes a dynamic indication of a second carrier and/or a second BWP to be used by the apparatus 302 for transmitting control information to the device 312. The dynamic indication might also or instead indicate other information, e.g. the dynamic indication might dynamically indicate a time-frequency resource in the second carrier and/or the second BWP to be used by the apparatus 302 for transmitting the control information to the device 312.

At step 556, the apparatus 302 transmits a second wireless communication to the device 312 on the second carrier and/or the second BWP. The second wireless communication includes the control information. At step 558, the device 312 receives the second wireless communication on the second carrier and/or the second BWP.

The first carrier may be different from the second carrier, e.g. as is the case in the examples in FIGs. 10 and 20. The first carrier may be the same as the second carrier, e.g. as is the case in the examples in FIGs. 9, 11, 15, 16, 19 and 22. The first BWP may be different from the second BWP, e.g. as is the case in the examples in FIGs. 9, 16, 19 and 22. The first BWP may be the same as the second BWP, e.g. as is the case in the examples in FIGs. 11 and 15.

In some embodiments, prior step 552 the device 312 may transmit, to apparatus 302, a semi-static indication of a plurality of carriers and/or BWPs on which the control information may be sent. The plurality of carriers and/or BWPs includes the second carrier and/or the second BWP. In this way, the active carriers/BWPs may be semi-statically configured, with a particular one of the active carriers/BWPs (i.e. the second carrier and/or second BWP in FIG. 24) being dynamically selected/indicated. In some embodiments, the semi-static indication is in RRC signaling and/or in a MAC CE. In some embodiments, the dynamic indication is in the physical layer, e.g. in physical layer signaling, such as in a physical layer channel.

In some embodiments, the dynamic indication is included in a control channel. In some embodiments, the dynamic indication is included in a data channel. In some embodiments, the control information transmitted in the second wireless communication is included in a control channel. A control channel might also be used to transmit other control-related information, e.g. a scheduling request and/or a channel measurement update, etc.

In some embodiments, the control information included in the second wireless communication is second control information, and the dynamic indication is included in first control information in the first wireless communication. In some embodiments, one field of the first control information indicates the second carrier and another field of the first control information indicates the second BWP. The first control information may be physical layer control information, e.g. DCI.

In some embodiments, the control information included in the second wireless communication corresponds to or is associated with (e.g. is a reply to or in response to) the first wireless communication, e.g. the control information included in the second wireless communication may be in response to data or control information present in the first wireless communication. In some embodiments, the first wireless communication includes data transmitted on the first carrier and/or the first BWP, and the control information transmitted in the second wireless communication is HARQ feedback corresponding to the data transmitted on the first carrier and/or the first BWP. In some embodiments, the data is low latency data.

In some embodiments, the dynamic indication indicates the second carrier and/or the second BWP by indicating an identity of a particular frame that has an association with the second carrier and/or the second BWP. The particular frame may be indicated by indicating a particular frame or frame structure index or ID. In some embodiments, the particular frame is a transmission frame.

In some embodiments, the first wireless communication is transmitted by the device 312 and received by the apparatus 302 on the first carrier and/or the first BWP during a reception duration of a first frame. An example of a first frame is a reception frame of the reception frame structures discussed herein, e.g. a reception frame in reception frame structure 450. In some embodiments, the reception duration is a time duration in which wireless transmission to the device 312 is prohibited on the first frame. An example of a reception duration is duration "R" described earlier. In some embodiments, the second wireless communication is transmitted by the apparatus 302 and received by the device 312 on the second carrier and/or the second BWP during a transmission duration of a second frame. An example of a second frame is a transmission frame of the transmission frame structures discussed herein, e.g. a transmission frame in transmission frame structure 452. In some embodiments, the transmission duration is a time duration in which wireless transmission from the device 312 is prohibited on the second frame. An example of a transmission duration is duration "T" described earlier.

In some embodiments, the second frame is one of a plurality of frames, where each one of the plurality of frames is associated with a different carrier and/or different BWP, and where the second frame is associated with the second carrier and/or the second BWP.

In some embodiments, the second frame has at least some of the transmission duration subsequent in time to a start of the reception duration of the first frame. In some embodiments, the second frame has at least some of the transmission duration overlapping in time and/or adjacent in time to the reception duration of the first frame.

In some embodiments, the first frame is one of a plurality of frames, where each one of the plurality of frames is associated with a different carrier and/or different BWP, and where the first frame is associated with the first carrier and/or the first BWP.

In some embodiments, the first frame is a reception frame and the second frame is a transmission frame. In some embodiments, the first frame is the same as the second frame. In some embodiments, no wireless transmission is sent to / received by the device 312 on the first BWP and/or the first carrier during the reception duration. In some embodiments, no wireless transmission is received by the apparatus 302 / transmitted by the device 312 on the second carrier and/or the second BWP during the transmission duration.

In some embodiments, the first frame includes a flexible duration (e.g. "F") in addition to and non-overlapping with the reception duration. The flexible duration may be a duration in time in which a direction of communication is configurable on an apparatus-specific basis. In some embodiments, the second frame also or instead includes a flexible duration in addition to and non-overlapping with the transmission duration.

In some embodiments, the device 312 performs the following steps during the method of FIG. 24: the device 312 determines the first frame to transmit the first wireless communication; the device 312 determines the second frame to receive the second wireless communication; the device 312 indicates, in the dynamic indication, the second carrier and/or the second BWP that is associated with the second frame. In some embodiment, the device 312 obtains, at a first time, data arrived for transmission. The device 312 then determines the first frame to transmit the first wireless communication by selecting the first frame based a location, in time, of the reception duration relative to the first time. The device 312 then determines the second frame to receive the second wireless communication by selecting the second frame based on a location, in time, of the transmission duration relative to the reception duration. The device 312 then transmits the data in the first wireless communication during the reception duration.

Examples of a device 312 and an apparatus 302 to perform the methods are also disclosed.

The device 312 may include a memory to store processor-executable instructions, and a processor to execute the processor-executable instructions. When the processor executes the processor-executable instructions, the processor may be caused generate the first wireless communication. For example, the processor may encode the dynamic indication of the second carrier and/or a second BWP. The first wireless communication may be generated in the digital domain and then sent to a transmitter for transmission. The processor may be part of the transmitter. As another example, the processor may receive the second wireless communication on the second carrier and/or the second BWP. The processor may receive the second wireless communication from the receiver and/or from one or more antennas or panels of the receiver. The processor may receive the second wireless communication at the input of the processor. The processor may process the second wireless communication, e.g. to decode and extract the control information. In some embodiments, the device 312 may be a circuit chip that generates the first wireless communication and receives the second wireless communication.

The apparatus 302 may include a memory to store processor-executable instructions, and a processor to execute the processor-executable instructions. When the processor executes the processor-executable instructions, the processor may be caused to receive the first wireless communication, e.g. at the input of the processor via one or more antennas or panels of a receiver. The processor may then process the first wireless communication, e.g. decode and extract the dynamic indication. As another example, the processor may generate the second wireless communication for transmission. Generating the second wireless communication may include encoding the control information. In some embodiments, the apparatus 302 may be a circuit chip that receives the first wireless communication and generates the second wireless communication.

Although the present invention has been described with reference to specific features and embodiments thereof, various modifications and combinations can be made thereto without departing from the invention. The description and drawings are, accordingly, to be regarded simply as an illustration of some embodiments of the invention as defined by the appended claims, and are contemplated to cover any and all modifications, variations, combinations or equivalents that fall within the scope of the present invention. Therefore, although the present invention and its advantages have been described in detail, various changes, substitutions and alterations can be made herein without departing from the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed, that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

Moreover, any module, component, or device exemplified herein that executes instructions may include or otherwise have access to a non-transitory computer/processor readable storage medium or media for storage of information, such as computer/processor readable instructions, data structures, program modules, and/or other data. A non-exhaustive list of examples of non-transitory computer/processor readable storage media includes magnetic cassettes, magnetic tape, magnetic disk storage or other magnetic storage devices, optical disks such as compact disc read-only memory (CD-ROM), digital video discs or digital versatile disc (DVDs), Blu-ray Disc^{™}, or other optical storage, volatile and non-volatile, removable and nonremovable media implemented in any method or technology, random-access memory (RAM), read-only memory (ROM), electrically erasable programmable read-only memory (EEPROM), flash memory or other memory technology. Any such non-transitory computer/processor storage media may be part of a device or accessible or connectable thereto. Any application or module herein described may be implemented using computer/processor readable/executable instructions that may be stored or otherwise held by such non-transitory computer/processor readable storage media.

## Claims

1. A method for wireless communication comprising:
receiving a first wireless communication (392) on a first carrier and/or a first bandwidth part. BWP, the first wireless communication (392) including a dynamic indication of a second carrier and/or a second BWP to be used for transmitting control information to a device (312);
transmitting a second wireless communication (394) to the device (312) on the second carrier and/or the second BWP, the second wireless communication (394) including the control information;
wherein the dynamic indication indicates the second carrier and/or the second BWP by indicating an identity of a particular frame that has an association with the second carrier and/or the second BWP.

2. The method of claim 1, wherein the first wireless communication (392) includes data transmitted on the first carrier and/or the first BWP, and wherein the control information transmitted in the second wireless communication (394) is hybrid automatic repeat request, HARQ, feedback corresponding to the data transmitted on the first carrier and/or the first BWP.

3. The method of claim 1 or 2, wherein the particular frame is a transmission frame.

4. An apparatus (302) comprising:
a memory (208, 258, 310, 320) to store processor-executable instructions;
a processor (210, 260, 308, 318) to execute the processor-executable instructions to cause the processor (210, 260, 308, 318) to:
receive a first wireless communication (392) on a first carrier and/or a first bandwidth part, BWP, the first wireless communication (392) including a dynamic indication of a second carrier and/or a second bandwidth part, BWP, to be used for transmitting control information to a device (312);
transmit a second wireless communication (394) to the device (312) on the second carrier and/or the second BWP, the second wireless communication (394) including the control information;
wherein the dynamic indication indicates the second carrier and/or the second BWP by indicating an identity of a particular frame that has an association with the second carrier and/or the second BWP.

5. The apparatus (302) of claim 4, wherein the first wireless communication (392) includes data transmitted on the first carrier and/or the first BWP, and wherein the control information transmitted in the second wireless communication (394) is hybrid automatic repeat request, HARQ, feedback corresponding to the data transmitted on the first carrier and/or the first BWP.

6. A method for wireless communication comprising:
transmitting, to an apparatus (302), a first wireless communication (392) on a first carrier and/or a first bandwidth part, BWP, the first wireless communication (392) including a dynamic indication of a second carrier and/or a second bandwidth part, BWP, to be used by the apparatus (302) for transmitting control information;
receiving, from the apparatus (302), a second wireless communication (394) on the second carrier and/or the second BWP, the second wireless communication (394) including the control information;
wherein the dynamic indication indicates the second carrier and/or the second BWP by indicating an identity of a particular frame that has an association with the second carrier and/or the second BWP.

7. The method of claim 6, wherein the first wireless communication (392) includes data transmitted on the first carrier and/or the first BWP, and wherein the control information received in the second wireless communication (394) is hybrid automatic repeat request, HARQ, feedback corresponding to the data transmitted on the first carrier and/or the first BWP.

8. The method of claim 6 or 7, wherein the particular frame is a transmission frame.

9. A device (312) comprising:
a memory (208, 258, 310, 320) to store processor-executable instructions;
a processor (210, 260, 308, 318) to execute the processor-executable instructions to cause the processor (210, 260, 308, 318) to:
transmit a first wireless communication (392) to an apparatus (302) on a first carrier and/or a first bandwidth part, BWP, the first wireless communication (392) including a dynamic indication of a second carrier and/or a second bandwidth part, BWP, to be used by the apparatus (302) for transmitting control information;
receive a second wireless communication (394) on the second carrier and/or the second BWP, the second wireless communication (394) including the control information;
wherein the dynamic indication indicates the second carrier and/or the second BWP by indicating an identity of a particular frame that has an association with the second carrier and/or the second BWP.

10. The device (312) of claim 9, wherein the first wireless communication (392) includes data transmitted on the first carrier and/or the first BWP, and wherein the control information received in the second wireless communication (394) is hybrid automatic repeat request, HARQ, feedback corresponding to the data transmitted on the first carrier and/or the first BWP.

## Patentansprüche

1. Verfahren zur drahtlosen Kommunikation, umfassend:
Empfangen einer ersten drahtlosen Kommunikation (392) auf einem ersten Träger und/oder einem ersten Bandbreitenteil, BWP, wobei die erste drahtlose Kommunikation (392) eine dynamische Anzeige eines zweiten Trägers und/oder eines zweiten BWP beinhaltet, der zum Übertragen von Steuerinformationen an eine Vorrichtung (312) zu verwenden ist;
Übertragen einer zweiten drahtlosen Kommunikation (394) an die Vorrichtung (312) auf dem zweiten Träger und/oder dem zweiten BWP, wobei die zweite drahtlose Kommunikation (394) die Steuerinformationen beinhaltet;
wobei die dynamische Anzeige den zweiten Träger und/oder den zweiten BWP durch Anzeigen einer Identität eines konkreten Rahmens anzeigt, der eine Verbindung mit dem zweiten Träger und/oder dem zweiten BWP aufweist.

2. Verfahren nach Anspruch 1, wobei die erste drahtlose Kommunikation (392) Daten beinhaltet, die auf dem ersten Träger und/oder dem ersten BWP übertragen werden, und wobei die in der zweiten drahtlosen Kommunikation (394) übertragenen Steuerinformationen Feedback einer hybriden automatischen Wiederholungsanforderung, HARQ-Feedback, sind, das den auf dem ersten Träger und/oder dem ersten BWP übertragenen Daten entspricht.

3. Verfahren nach Anspruch 1 oder 2, wobei es sich bei dem konkreten Rahmen um einen Übertragungsrahmen handelt.

4. Einrichtung (302), umfassend:
einen Speicher (208, 258, 310, 320) zum Speichern von prozessorausführbaren Anweisungen;
einen Prozessor (210, 260, 308, 318) zum Ausführen der prozessorausführbaren Anweisungen, um den Prozessor (210, 260, 308, 318) zu Folgendem zu veranlassen:
Empfangen einer ersten drahtlosen Kommunikation (392) auf einem ersten Träger und/oder einem ersten Bandbreitenteil, BWP, wobei die erste drahtlose Kommunikation (392) eine dynamische Anzeige eines zweiten Trägers und/oder eines zweiten Bandbreitenteils, BWP, beinhaltet, der zum Übertragen von Steuerinformationen an eine Vorrichtung (312) zu verwenden ist;
Übertragen einer zweiten drahtlosen Kommunikation (394) an die Vorrichtung (312) auf dem zweiten Träger und/oder dem zweiten BWP, wobei die zweite drahtlose Kommunikation (394) die Steuerinformationen beinhaltet;
wobei die dynamische Anzeige den zweiten Träger und/oder den zweiten BWP durch Anzeigen einer Identität eines konkreten Rahmens anzeigt, der eine Verbindung mit dem zweiten Träger und/oder dem zweiten BWP aufweist.

5. Einrichtung (302) nach Anspruch 4, wobei die erste drahtlose Kommunikation (392) Daten beinhaltet, die auf dem ersten Träger und/oder dem ersten BWP übertragen werden, und wobei die in der zweiten drahtlosen Kommunikation (394) übertragenen Steuerinformationen Feedback einer hybriden automatischen Wiederholungsanforderung, HARQ-Feedback, sind, das den auf dem ersten Träger und/oder dem ersten BWP übertragenen Daten entspricht.

6. Verfahren zur drahtlosen Kommunikation, umfassend:
Übertragen, an eine Einrichtung (302), einer ersten drahtlosen Kommunikation (392) auf einem ersten Träger und/oder einem ersten Bandbreitenteil, BWP, wobei die erste drahtlose Kommunikation (392) eine dynamische Anzeige eines zweiten Trägers und/oder eines zweiten Bandbreitenteils, BWP, beinhaltet, der zum Übertragen von Steuerinformationen durch die Einrichtung (302) zu verwenden ist;
Empfangen, von der Einrichtung (302), einer zweiten drahtlosen Kommunikation (394) auf dem zweiten Träger und/oder dem zweiten BWP, wobei die zweite drahtlose Kommunikation (394) die Steuerinformationen beinhaltet;
wobei die dynamische Anzeige den zweiten Träger und/oder den zweiten BWP durch Anzeigen einer Identität eines konkreten Rahmens anzeigt, der eine Verbindung mit dem zweiten Träger und/oder dem zweiten BWP aufweist.

7. Verfahren nach Anspruch 6, wobei die erste drahtlose Kommunikation (392) Daten beinhaltet, die auf dem ersten Träger und/oder dem ersten BWP übertragen werden, und wobei die in der zweiten drahtlosen Kommunikation (394) empfangenen Steuerinformationen Feedback einer hybriden automatischen Wiederholungsanforderung, HARQ-Feedback, sind, die den auf dem ersten Träger und/oder dem ersten BWP übertragenen Daten entsprechen.

8. Verfahren nach Anspruch 6 oder 7, wobei es sich bei dem konkreten Rahmen um einen Übertragungsrahmen handelt.

9. Vorrichtung (312), umfassend:
einen Speicher (208, 258, 310, 320) zum Speichern von prozessorausführbaren Anweisungen;
einen Prozessor (210, 260, 308, 318) zum Ausführen der prozessorausführbaren Anweisungen, um den Prozessor (210, 260, 308, 318) zu Folgendem zu veranlassen:
Übertragen einer ersten drahtlosen Kommunikation (392) an eine Einrichtung (302) auf einem ersten Träger und/oder einem ersten Bandbreitenteil, BWP, wobei die erste drahtlose Kommunikation (392) eine dynamische Anzeige eines zweiten Trägers und/oder eines zweiten Bandbreitenteils, BWP, beinhaltet, der zum Übertragen von Steuerinformationen an die Einrichtung (302) zu verwenden ist;
Empfangen einer zweiten drahtlosen Kommunikation (394) auf dem zweiten Träger und/oder dem zweiten BWP, wobei die zweite drahtlose Kommunikation (394) die Steuerinformationen beinhaltet;
wobei die dynamische Anzeige den zweiten Träger und/oder den zweiten BWP durch Anzeigen einer Identität eines konkreten Rahmens anzeigt, der eine Verbindung mit dem zweiten Träger und/oder dem zweiten BWP aufweist.

10. Vorrichtung (312) nach Anspruch 9, wobei die erste drahtlose Kommunikation (392) Daten beinhaltet, die auf dem ersten Träger und/oder dem ersten BWP übertragen werden, und wobei die in der zweiten drahtlosen Kommunikation (394) empfangenen Steuerinformationen Feedback einer hybriden automatischen Wiederholungsanforderung, HARQ-Feedback, sind, die den auf dem ersten Träger und/oder dem ersten BWP übertragenen Daten entsprechen.

## Revendications

1. Procédé de communication sans fil, comprenant :
la réception d'une première communication sans fil (392) sur une première porteuse et/ou une première partie de bande passante. BWP, la première communication sans fil (392) comportant une indication dynamique d'une seconde porteuse et/ou d'une seconde BWP à utiliser pour la transmission d'informations de commande à un dispositif (312) ;
la transmission d'une seconde communication sans fil (394) au dispositif (312) sur la seconde porteuse et/ou la seconde BWP, la seconde communication sans fil (394) comportant les informations de commande ;
dans lequel l'indication dynamique indique la seconde porteuse et/ou la seconde BWP en indiquant une identité d'une trame particulière qui a une association avec la seconde porteuse et/ou la seconde BWP.

2. Procédé selon la revendication 1, dans lequel la première communication sans fil (392) comporte des données transmises sur la première porteuse et/ou la première BWP, et dans lequel les informations de commande transmises dans la seconde communication sans fil (394) sont un retour de demande de répétition automatique hybride, HARQ, correspondant aux données transmises sur la première porteuse et/ou la première BWP.

3. Procédé selon la revendication 1 ou 2, dans lequel la trame particulière est une trame de transmission.

4. Appareil (302) comprenant :
une mémoire (208, 258, 310, 320) pour stocker des instructions exécutables par le processeur ;
un processeur (210, 260, 308, 318) pour exécuter les instructions exécutables par le processeur afin d'amener le processeur (210, 260, 308, 318) à :
recevoir une première communication sans fil (392) sur une première porteuse et/ou une première partie de bande passante, BWP, la première communication sans fil (392) comportant une indication dynamique d'une seconde porteuse et/ou d'une seconde partie de bande passante, BWP, à utiliser pour la transmission d'informations de commande à un dispositif (312) ;
transmettre une seconde communication sans fil (394) au dispositif (312) sur la seconde porteuse et/ou la seconde BWP, la seconde communication sans fil (394) comportant les informations de commande ;
dans lequel l'indication dynamique indique la seconde porteuse et/ou la seconde BWP en indiquant une identité d'une trame particulière qui a une association avec la seconde porteuse et/ou la seconde BWP.

5. Appareil (302) selon la revendication 4, dans lequel la première communication sans fil (392) comporte des données transmises sur la première porteuse et/ou la première BWP, et dans lequel les informations de commande transmises dans la seconde communication sans fil (394) sont un retour de demande de répétition automatique hybride, HARQ, correspondant aux données transmises sur la première porteuse et/ou la première BWP.

6. Procédé de communication sans fil comprenant :
la transmission, à un appareil (302), d'une première communication sans fil (392) sur une première porteuse et/ou une première partie de bande passante, BWP, la première communication sans fil (392) comportant une indication dynamique d'une seconde porteuse et/ou d'une seconde partie de bande passante, BWP, à utiliser par l'appareil (302) pour la transmission d'informations de commande ;
la réception, de l'appareil (302), d'une seconde communication sans fil (394) sur la seconde porteuse et/ou la seconde BWP, la seconde communication sans fil (394) comportant les informations de commande ;
dans lequel l'indication dynamique indique la seconde porteuse et/ou la seconde BWP en indiquant une identité d'une trame particulière qui a une association avec la seconde porteuse et/ou la seconde BWP.

7. Procédé selon la revendication 6, dans lequel la première communication sans fil (392) comporte des données transmises sur la première porteuse et/ou la première BWP, et dans lequel les informations de commande reçues dans la seconde communication sans fil (394) sont un retour de demande de répétition automatique hybride, HARQ, correspondant aux données transmises sur la première porteuse et/ou la première BWP.

8. Procédé selon la revendication 6 ou 7, dans lequel la trame particulière est une trame de transmission.

9. Dispositif (312) comprenant :
une mémoire (208, 258, 310, 320) pour stocker des instructions exécutables par le processeur ;
un processeur (210, 260, 308, 318) pour exécuter les instructions exécutables par le processeur afin d'amener le processeur (210, 260, 308, 318) à :
transmettre une première communication sans fil (392) à un appareil (302) sur une première porteuse et/ou une première partie de bande passante, BWP, la première communication sans fil (392) comportant une indication dynamique d'une seconde porteuse et/ou d'une seconde partie de bande passante, BWP, à utiliser par l'appareil (302) pour la transmission d'informations de commande ;
recevoir une seconde communication sans fil (394) sur la seconde porteuse et/ou la seconde BWP, la seconde communication sans fil (394) comportant les informations de commande ;
dans lequel l'indication dynamique indique la seconde porteuse et/ou la seconde BWP en indiquant une identité d'une trame particulière qui a une association avec la seconde porteuse et/ou la seconde BWP.

10. Dispositif selon la revendication 6, dans lequel la première communication sans fil (392) comporte des données transmises sur la première porteuse et/ou la première BWP, et dans lequel les informations de commande reçues dans la seconde communication sans fil (394) sont un retour de demande de répétition automatique hybride, HARQ, correspondant aux données transmises sur la première porteuse et/ou la première BWP.
